# EUROPEAN PATENT APPLICATION

(11) **EP 4 657 949 A1**
(43) Date of publication of application: **03.12.2025**
(21) Application number: 24777836.8
(22) Date of filing: 20.03.2024
(51) Int. Cl.: H04W 72/11

(54) **COMMUNICATION METHOD AND APPARATUS**

(30) Priority: 30.03.2023 CN 202310371607
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN)
(74) Representative: Gill Jennings & Every LLP
(86) International application number: PCT/CN2024/082755
(87) International publication number: WO 2024/199047

(57) **Abstract**

This application discloses a communication method and apparatus. The method includes: A terminal device receives first data. The first data is data of a first service, the first service is a service that allows erroneous data transmission or delivery, and CRC is not performed on the first data. The terminal device delivers the first data carried on a first logical channel. In the method, before the first data is delivered, CRC may not be performed on the first data. According to the method, even if an error occurs during transmission of the first data, erroneous delivery of the first data is still performed. Compared with performing CRC on the first data before delivery, this can avoid a delivery failure of the first data caused by an error in the first data, to obtain an error-tolerant transmission gain of the data.

## Description

### CROSS-REFERENCE TO RELATED APPLICATIONS

This application claims priority to Chinese Patent Application No. 202310371607.X, filed with the China National Intellectual Property Administration on March 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, during data transmission between a transmit end device and a receive end device, to ensure correct data transmission, the transmit end device needs to perform cyclic redundancy check (cyclic redundancy check, CRC) processing on to-be-sent data. After receiving the data from the transmit end device, the receive end device performs CRC on the data. If the check fails, the data is discarded or waits for retransmission.

In a possible scenario, for example, in a semantic communication scenario, the focus is on a meaning expressed by the data. Even if an error occurs during data transmission, it is still possible to infer, based on the received data, the meaning expressed by the data packet. In this case, how to transmit the data becomes a problem to be resolved urgently.

### SUMMARY

Embodiments of this application provide a communication method and apparatus, to perform erroneous delivery of data when a data error is permissible, to obtain an error-tolerant transmission gain of the data.

To achieve the foregoing objectives, the following technical solutions are used in embodiments of this application.

According to a first aspect, an embodiment of this application provides a first communication method. The method may be performed by a first communication apparatus. The first communication apparatus may be a communication device or a communication apparatus that can support the communication device in implementing a function required in the method, for example, a chip system. The first communication apparatus may be a receive end of two communication ends. For example, the two communication ends include an access network device and a terminal device, a transmit end is the access network device, and the receive end is the terminal device. The first communication apparatus may be a terminal device, or a unit, a functional module, or the like in the terminal device. For example, the first communication apparatus may be a chip disposed in the terminal device, or the first communication apparatus is another component configured to implement a function of the terminal apparatus. The following describes the method provided in the first aspect by using an example in which the first communication apparatus is the terminal device.

The communication method includes: The terminal device receives first data. The first data is data of a first service, the first service is a service that allows erroneous data transmission or delivery, and CRC is not performed on the first data. The terminal device delivers the first data carried on a first logical channel.

In the method, before the first data is delivered, CRC may not be performed on the first data. According to the method, even if an error occurs during transmission of the first data, erroneous delivery of the first data is still performed. Compared with performing CRC on the first data before delivery, this can avoid a delivery failure of the first data caused by an error in the first data, to obtain an error-tolerant transmission gain of the data.

In a possible implementation, after delivering the first data carried on the first logical channel, the method further includes: The terminal device maps, only to a first packet data convergence protocol (packet data convergence protocol, PDCP) layer entity by using a service data adaptation protocol (service data adaptation protocol, SDAP) layer entity, a quality of service (quality of service, QoS) flow to which the first data belongs.

The first service may be considered as a type of service. For this type of service, it may be predefined or agreed that only data of this type of service can be mapped to the PDCP layer.

In a possible implementation, an integrity protection check function of the first PDCP layer entity is not turned on, or the integrity protection check function of the first PDCP layer entity is not enabled, or the first PDCP layer entity does not support/does not have the integrity protection check function. When the first data is data of the first service, the first PDCP layer entity does not perform integrity protection check. Optionally, when the integrity protection check function of the PDCP layer entity is not turned on, the SDAP can map only the data of the first service.

In a possible implementation, the method further includes: The terminal device receives second data, where CRC is performed on the second data. Before delivering the first data carried on the first logical channel, the method further includes: The terminal device receives a MAC protocol data unit (protocol data unit, PDU) by using a medium access control (medium access control, MAC) layer entity. The MAC PDU includes the first data, and does not include the second data.

For the second data on which CRC is performed and the first data on which CRC is not performed, the MAC layer entity does not encapsulate the first data and the second data into one PDU, to avoid an error-tolerant conflict.

In a possible implementation, the method further includes: The terminal device receives a configuration message. The configuration message indicates that CRC does not need to be performed on the first data at a physical (physical, PHY) layer.

The configuration message may indicate the terminal device that CRC does not need to be performed on the first data at the PHY layer, so that after clearly obtaining the first data, the terminal device may perform delivery without performing CRC at the PHY layer.

In a possible implementation, the configuration message is one of the following: information about a first search space, a first scrambling parameter, semi-persistent scheduling (semi-persistent scheduling, SPS) information, or information included in first downlink control information (downlink control information, DCI). DCI for scheduling the first data is located in the first search space; the DCI for scheduling the first data is scrambled by using the first scrambling parameter; the first data is transmitted on a time-frequency resource configured by using the SPS information; or the first DCI is used to schedule the first data.

By using one or more of the foregoing configurations, it may be explicitly or implicitly indicated that CRC does not need to be performed on the first data at the PHY layer, so that no additional resource is required to indicate that CRC does not need to be performed on the first data at the PHY layer, thereby effectively saving transmission resources.

In a possible implementation, that the first service is a service that allows erroneous data transmission or delivery includes: A transmission error rate of the data allowed by first service is greater than a first threshold and/or less than a second threshold.

In a possible implementation, the first logical channel is further used to carry data of a second service, and a transmission error rate of the data allowed by the second service is less than a transmission error rate of the data allowed by the first service; or the first logical channel is a logical channel dedicated to carrying the data of the first service.

Whether the data carried on the logical channel is erroneously delivered may be distinguished by using the logical channel. For example, a logical channel, such as a first logical channel, dedicated to carrying the data of the first service may be configured; and a logical channel, such as a second logical channel, dedicated to carrying the data of the second service may be configured. CRC does not need to be performed at the PHY layer on the data carried on the first logical channel, and CRC needs to be performed at the PHY layer on the data carried on the second logical channel. Logical information may implicitly indicate data on which CRC does not need to be performed at the PHY layer, so that no additional resource is required to indicate that CRC does not need to be performed on the data at the PHY layer, thereby effectively saving transmission resources.

In a possible implementation, the method further includes: The terminal device receives indication information, where the indication information may indicate a first verification method. The terminal device verifies the first data according to the first verification method.

The first verification method may be a predefined verification method or an agreed verification method. The first verification method may be different from a CRC verification method at the PHY layer. For example, the first verification method may be a verification method for verifying a transmission error rate of the first data. The terminal device verifies the first data according to the first verification method, thereby determining the transmission error rate of the first data, and helping parse a meaning represented by the first data.

According to a second aspect, an embodiment of this application provides a second communication method. The method may be performed by a second communication apparatus. The second communication apparatus may be a communication device or a communication apparatus that can support the communication device in implementing a function required in the method, for example, a chip system. The second communication apparatus may be a transmit end of two communication ends. For example, the two communication ends include an access network device and a terminal device, and the transmit end is the access network device. The second communication apparatus may be an access network device, or a unit, a functional module, or the like in the access network device. For example, the second communication apparatus may be a chip disposed in the access network device, or a first communication apparatus is another component configured to implement a function of the access network device. The following describes the method provided in the second aspect by using an example in which the second communication apparatus is the access network device.

The communication method includes: The access network device sends a configuration message; receives first data carried on a first logical channel; and sends the first data. The configuration message indicates that CRC does not need to be performed on the first data at a PHY layer. The first data is data of a first service, the first service is a service that allows erroneous data transmission or delivery, and CRC is not performed on the first data.

In a possible implementation, before receiving the first data carried on the first logical channel, the method further includes: The access network device maps, only to a first PDCP layer entity by using an SDAP layer entity, a QoS flow to which the first data belongs.

In a possible implementation, an integrity protection check function of the first PDCP layer entity is not turned on.

In a possible implementation, the method further includes: The access network device receives second data carried on a second logical channel and then sends the second data, where CRC is performed on the second data.

In a possible implementation, before sending the first data, the method further includes: The access network device sends a PHY PDU to the PHY layer by using a MAC layer entity, where the PHY PDU includes the first data and does not include the second data.

In a possible implementation, the configuration message is one or more of the following: information about a first search space, a first scrambling parameter, SPS information, or information included in first DCI. DCI for scheduling the first data is located in the first search space; the DCI for scheduling the first data is scrambled by using the first scrambling parameter; the first data is transmitted on a time-frequency resource configured by using the SPS information; or the first DCI is used to schedule the first data.

In a possible implementation, that the first service is a service that allows erroneous data transmission or delivery includes: A transmission error rate of the data allowed by first service is greater than a first threshold and/or less than a second threshold.

In a possible implementation, the first logical channel is further used to carry data of a second service, and a transmission error rate of the data allowed by the second service is less than a transmission error rate of the data allowed by the first service; or the first logical channel is a logical channel dedicated to carrying the data of the first service.

In a possible implementation, the method further includes: The access network device receives indication information, where the indication information indicates that the first data is data of the first service.

In the method, whether CRC needs to be performed on the to-be-sent first data at the PHY layer may be indicated to the access network device, so that the access network device configures, for the terminal device, information used to transmit the first data.

In a possible implementation, the indication information is information sent by a core network, and/or the indication information is included in a QFI.

For technical effects brought by the second aspect and the possible implementations of the second aspect, refer to descriptions of technical effects of corresponding implementations of the first aspect.

According to a third aspect, an embodiment of this application provides a third communication method. The method may be performed by two communication ends. The two communication ends may be a transmit end and a receive end, or may be the transmit end and an internal unit of the receive end, or may be an internal unit of the transmit end and the receive end, or may be the internal unit of the transmit end and the internal unit of the receive end. The internal unit of the transmit end may be a chip or a functional module disposed in the transmit end. The internal unit of the receive end may be a chip or a functional module disposed in the receive end. For ease of description, the following describes the method provided in the third aspect by using an example in which the transmit end is an access network apparatus and the receive end is a terminal apparatus.

The communication method includes: The access network apparatus sends a configuration message, where the configuration message indicates that CRC does not need to be performed on first data at a PHY layer, the first data is data of a first service, and the first service is a service that allows erroneous data transmission or delivery. The access network apparatus receives the first data carried on a first logical channel, and sends the first data, where CRC is not performed on the first data. The terminal apparatus receives the first data and delivers the first data carried on the first logical channel.

For technical effects brought by the third aspect and the possible implementations of the third aspect, refer to descriptions of the technical effects of the first aspect and the possible implementations of the first aspect.

According to a fourth aspect, an embodiment of this application provides a communication apparatus. The communication apparatus has a function of implementing behaviors in the method embodiment according to any one of the first aspect and the second aspect. For beneficial effects, refer to descriptions of the first aspect and the second aspect. Details are not described herein again. For example, the communication apparatus may be the first communication apparatus in the first aspect. For example, the communication apparatus may be a terminal device, or a chip or a chip system in the terminal device. Alternatively, the communication apparatus may be an apparatus that can support the terminal device in the first aspect in implementing a function required in the method provided in the first aspect. For example, the communication apparatus may be the terminal device. For another example, the communication apparatus may alternatively be the second communication apparatus in the second aspect. For example, the communication apparatus may be an access network device, or a chip or a chip system in the access network device. Alternatively, the communication apparatus may be an apparatus that can support the access network device in the second aspect in implementing a function required in the method provided in the first aspect. For example, the communication apparatus may be the access network device.

In a possible design, the communication apparatus includes a corresponding means (means) or module configured to perform the method according to any one of the first aspect and the second aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units. These units (modules) may perform corresponding functions in the method example according to any one of the first aspect and the second aspect. For details, refer to the detailed descriptions in the method examples. Details are not described herein.

According to a fifth aspect, an embodiment of this application provides a communication apparatus. The communication apparatus may be the communication apparatus in the fourth aspect of the foregoing embodiments, or may be a chip or a chip system disposed in the communication apparatus in the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the access network device or the terminal device in the foregoing method embodiments. For example, the communication apparatus may be the access network device or a functional module in the access network device, for example, a baseband chip and a radio frequency chip. For another example, the communication apparatus may be the terminal device or a functional module in the terminal device, for example, a baseband chip and a radio frequency chip.

According to a sixth aspect, an embodiment of this application provides a chip system. The chip system includes a processor and may further include a memory and/or a communication interface, configured to implement the method according to any one of the first aspect and the second aspect. Optionally, the chip system further includes the memory. The memory is configured to store a computer program (which may also be referred to as code or instructions). The processor is configured to invoke the computer program from the memory and run the computer program, so that a device in which the chip system is installed performs the method according to any one of the first aspect and the second aspect and any one of the possible implementations of any one of the first aspect and the second aspect. The chip system may include a chip, or may include the chip and another discrete component.

According to a seventh aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect and the second aspect.

In a specific implementation process, the communication apparatus may be a chip, the input circuit may be an input pin, the output circuit may be an output pin, and the logic circuit may be a transistor, a gate circuit, a trigger, various logic circuits, and the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal, such as a smartphone, or may be an access network device, such as a base station. The interface circuit may be a radio frequency processing chip in the wireless communication device, and the processing circuit may be a baseband processing chip in the wireless communication device.

According to an eighth aspect, an embodiment of this application provides a communication system. The communication system includes the communication apparatus in the fourth aspect that is configured to implement the functions in the first aspect and the communication apparatus in the fourth aspect that is configured to implement the functions in the second aspect. Optionally, the communication system further includes a core network device. The core network device may be configured to send indication information to the communication apparatus implementing the functions in the second aspect. The indication information may indicate that first data is data of a first service.

According to a ninth aspect, an embodiment of this application provides a communication system. The communication system includes a core network device and the communication apparatus in the fourth aspect that is configured to implement the functions in the second aspect. The core network device may be configured to send indication information to the communication apparatus implementing the functions in the second aspect. The indication information may indicate that first data is data of a first service. Optionally, the communication system further includes the communication apparatus in the fourth aspect that is configured to implement the functions in the first aspect.

According to a tenth aspect, this application provides a computer-readable storage medium. The computer-readable storage medium stores a computer program. When the computer program is run, the method in any one of the first aspect and the second aspect is implemented.

According to an eleventh aspect, a computer program product is provided. The computer program product includes computer program code. When the computer program code is run, the method in any one of the first aspect and the second aspect is performed.

For beneficial effects of the fourth aspect to the eleventh aspect and the implementations thereof, refer to the descriptions of the first aspect and the second aspect, or the beneficial effects of the first aspect and the second aspect and the implementations thereof.

### BRIEF DESCRIPTION OF DRAWINGS

FIG. 1 is a diagram of an example structure of a communication system to which an embodiment of this application is applicable;
FIG. 2 is a diagram of transmission of data sent by a network device to a terminal device between layers;
FIG. 3 is a diagram of specific functions of a MAC layer and a PHY layer;
FIG. 4 is a diagram of a structure of a first data transmission process according to an embodiment of this application;
FIG. 5 is a schematic flowchart of a first communication method according to an embodiment of this application;
FIG. 6 is a schematic flowchart of a second communication method according to an embodiment of this application;
FIG. 7 is a diagram of a structure of a communication apparatus according to an embodiment of this application; and
FIG. 8 is a diagram of another structure of a communication apparatus according to an embodiment of this application.

### DESCRIPTION OF EMBODIMENTS

The technical solutions provided in embodiments of this application may be applied to a fifth generation (the fifth generation, 5G) mobile communication system, or may be applied to a long term evolution (long term evolution, LTE) system, or may be applied to a next generation mobile communication system, for example, a 6G mobile communication system or other similar communication systems. Other similar communication systems include, for example, vehicle to everything (vehicle to everything, V2X), an internet of things (internet of things, IoT) system, and a narrowband internet of things (narrowband internet of things, NB-IoT) system. The IoT may be understood as an IoT based on wireless fidelity (wireless fidelity, Wi-Fi) or a wearable Wi-Fi network. The wearable Wi-Fi network is a Wi-Fi network formed by a terminal device (for example, a mobile phone) as a virtual access point and an associated wearable device. Embodiments of this application are described by using a 5G mobile communication system as an example. When the technical solutions in embodiments of this application are applied to another communication system, devices, components, modules, and the like in embodiments may be replaced with corresponding devices, components, and modules in the another communication system. This is not limited.

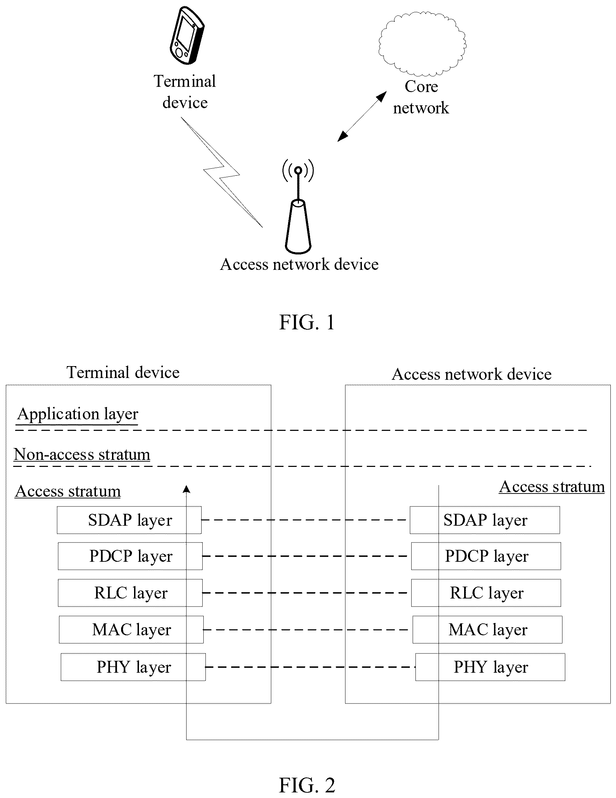

FIG. 1 shows a network architecture of a 5G communication system. The network architecture may include a network device and at least one terminal device. In FIG. 1, an example in which the at least one terminal device is two terminal devices is used. The network architecture shown in FIG. 1 is merely an example. For example, the network device may include an access network device. For another example, the network device includes an access network device and a core network. The terminal device accesses the core network by using the access network device, and may communicate with a data network (data network, DN) and the like by using the core network.

The access network device is a network-side device having a wireless transceiver function. The access network device may be an apparatus that is in a radio access network (radio access network, RAN) and that provides a wireless communication function for the terminal device, and is referred to as a RAN device. For example, the access network device may be a base station (base station), for example, an evolved NodeB (evolved NodeB, referred to as an eNB or an e-NodeB for short) in a long term evolution LTE system or a long term evolution-advanced (long term evolution-advanced, LTE-A) system. The eNB is an apparatus that is deployed in a radio access network and that meets a 4G standard and provides a wireless communication function for a terminal device. The network device may alternatively be a new radio controller (new radio controller, NR controller), may be a gNodeB (gNodeB, gNB) in a 5G system, may be a central network element (central unit), may be a new radio base station, may be a remote radio unit, may be a micro base station (also referred to as a small cell), may be a relay (relay), may be a distributed network element (distributed unit), may be macro base stations in various forms, or may be a transmission reception point (transmission reception point, TRP), a transmission measurement function (transmission measurement function, TMF), a transmission point (transmission point, TP), or any other radio access device. Embodiments of this application are not limited thereto. The network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a remote radio unit (remote radio unit, RRU), a Wi-Fi access point (access point, AP), a baseband unit pool (BBU pool) and an RRU in a cloud radio access network (cloud radio access network, CRAN), or the like. A specific technology and a specific device form used by the network device are not limited in embodiments of this application. The network device may correspond to an eNB in a 4G system, and correspond to a gNB in a 5G system.

In addition, the access network device in embodiments of this application may include a central unit (central unit, CU) and a distributed unit (distributed unit, DU), and a plurality of DUs may be centrally controlled by one CU. The CU and the DU may be obtained through division based on protocol layer functions of a wireless network. For example, functions of a PDCP layer and a protocol layer above the PDCP layer are set on the CU, and functions of a protocol layer below the PDCP layer, such as a radio link control (radio link control, RLC) layer and a MAC layer, are set on the DU. It should be noted that such protocol layer division is merely an example, and division may alternatively be performed at another protocol layer. A radio frequency apparatus may be remotely deployed and not disposed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In this network architecture, signaling generated by the CU may be sent to a terminal device by using the DU, or signaling generated by UE may be sent to the CU by using the DU. The DU may directly encapsulate the signaling at a protocol layer and then transparently transmit the signaling to the terminal device or the CU without parsing the signaling. In the network architecture, the CU is classified as a network device on a RAN side. In addition, the CU may alternatively be classified as a network device on a core network (core network, CN) side. This is not limited in this application.

In embodiments of this application, the access network device is an apparatus that may be configured to implement a function of the access network device, or may be an apparatus that can support the access network device in implementing the function, for example, a chip system. The apparatus may be installed in the access network device. The chip system may include a chip, or may include the chip and another discrete component. In embodiments of this application, the technical solutions provided in embodiments of this application are described by using an example in which the apparatus configured to implement the function of the access network device is the access network device.

The terminal device has a wireless transceiver function, and may send a signal to the network device, or receive a signal from the network device. For example, the terminal device, also referred to as a terminal, includes user equipment (user equipment, UE), an access station, a UE station, a remote station, a wireless communication device, a user apparatus, a chip, or the like. In embodiments of this application, unless otherwise specified, the terminal device and a terminal device in the following have a same meaning. The terminal device is configured to connect people, things, machines, and the like, and may be widely used in various scenarios, for example, including but not limited to the following scenarios: cellular communication, device-to-device (device-to-device, D2D) communication, V2X, machine-to-machine/machine-type communication (machine-to-machine/machine-type communication, M2M/MTC), IoT, virtual reality (virtual reality, VR), augmented reality (augmented reality, AR), industrial control (industrial control), self driving (self driving), telemedicine (remote medical), a smart grid (smart grid), smart furniture, a smart office, a smart wearable, smart transportation, a smart city (smart city), an uncrewed aerial vehicle, and a robot.

For example, the terminal device in embodiments of this application may be a mobile phone, a tablet computer, a computer with a wireless transceiver function, a VR terminal, an AR terminal, a wireless terminal in industrial control, a vehicle, a wireless communication module in a vehicle, an on-board T-box (Telematics BOX), an RSU, a wireless terminal in self driving, a smart speaker in an IoT network, a wireless terminal device in telemedicine, a wireless terminal device in a smart grid, a wireless terminal device in transportation safety, or a wireless terminal device in a smart city, or a wireless terminal device in a smart home. As an example instead of a limitation, the terminal device in embodiments of this application may alternatively be a wearable device. The wearable device may also be referred to as a wearable intelligent device, an intelligent wearable device, or the like, and is a generic term of wearable devices that are intelligently designed and developed for daily wear by using a wearable technology, for example, glasses, gloves, watches, clothes, and shoes.

The terminal device may further include a relay (relay). Alternatively, it is understood that any device that can perform data communication with a base station may be considered as the terminal device. If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted assembly, a vehicle-mounted component, a vehicle-mounted chip, or an on-board unit that is built in a vehicle as one or more components or units. The vehicle uses the vehicle-mounted module, the vehicle-mounted assembly, the vehicle-mounted component, the vehicle-mounted chip, or the on-board unit that is built in the vehicle, to implement a method in this application.

In embodiments of this application, the terminal device is an apparatus that may be configured to implement a function of the terminal device, or may be an apparatus that can support the terminal device in implementing the function, for example, a chip system. The apparatus may be installed in the terminal device. For example, the terminal device may alternatively be a vehicle detector. The chip system may include a chip, or may include the chip and another discrete component. Unless otherwise specified, the terminal device, the terminal device, and the terminal have the same meaning and may be replaced with each other. In embodiments of this application, the technical solutions provided in embodiments of this application are described by using an example in which the apparatus configured to implement the function of the terminal device is the terminal device.

As a bearer network, the core network (core network, CN) provides an interface to the DN, provides communication connection, authentication, management, and policy control for the terminal device, bears a data service, and the like. The CN may include at least one core network device, for example, may include two types, namely, a user plane function network element (which may be referred to as a user plane network element for short) and a control plane function network element (which may be referred to as a control plane network element for short). The control plane function network element may include an access management network element, a session management network element, a unified data management network element, a policy control network element, and the like. It should be noted that the CN may include one or more CN devices. The CN device may be a network element configured to perform the foregoing single network function, or may be a network element configured to perform the foregoing plurality of network functions. When one CN device is configured to perform the plurality of network functions, the CN device may include one or more functional modules configured to perform the plurality of network functions. The functional module may be a software module, or may be a software/hardware module. This is not limited in embodiments of this application.

The network architecture/system and the service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems. The apparatus in the following embodiments of this application may be located in the terminal device or the network device based on a function implemented by the apparatus. When the foregoing CU-DU structure is used, the network device may be a CU, a DU, or a RAN device including a CU and a DU.

Communication between the access network device and the terminal device complies with a specific protocol layer structure. For example, data sent by the access network device to the terminal device needs to pass through a user plane protocol layer. A user plane protocol layer structure includes an SDAP layer, a PDCP layer, an RLC layer, a MAC layer, and a physical layer (physical layer, PHY)/PHY layer. Functions of the one or more protocol layers may be implemented by one or more nodes of the access network device or the terminal device. For example, if the access network device includes a CU and a DU, functions of the PDCP layer and a protocol layer above the PDCP layer are set on the CU, and functions of a protocol layer below the PDCP layer, such as the RLC layer and the MAC layer, are set on the DU. Such protocol layer division is merely an example, and division may alternatively be performed at another protocol layer. For example, division is performed at the RLC layer. Functions of the RLC layer and the protocol layers above the RLC layer are set on the CU, and functions of the protocol layers below the RLC layer are set on the DU. Alternatively, division is performed at a particular protocol layer. For example, some functions of the RLC layer and functions of the protocol layers above the RLC layer are set on the CU, and remaining functions of the RLC layer and functions of the protocol layers below the RLC layer are set on the DU. In addition, division may alternatively be performed in another manner. For example, division is performed based on a latency. A function whose processing time needs to meet a latency requirement is set on the DU, and a function whose processing time does not need to meet the latency requirement is set on the CU.

The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Data transmission is used as an example in the following. FIG. 2 is a diagram of transmission of data sent by the access network device to the terminal device between layers. In FIG. 2, a downward arrow represents data sending, and an upward arrow represents data receiving. In embodiments of this application, data sent by the access network device to the terminal device is also referred to as downlink data.

During downlink data transmission, after obtaining data from an upper layer, the PDCP layer transmits the data to the RLC layer and the MAC layer. The MAC layer generates a transport block (transport block, TB), and then wireless transmission is performed through the physical layer. Data is correspondingly encapsulated at each layer. Data received by a layer from an upper layer of the layer is considered as a service data unit (service data unit, SDU) of the layer. After being encapsulated at the layer, the data becomes a PHY PDU, and is then transferred to a next layer. For example, data received by the PDCP layer from an upper layer is referred to as a PDCP SDU, and data sent by the PDCP layer to a lower layer is referred to as a PDCP PDU; data received by the RLC layer from an upper layer is referred to as an RLC SDU, and data sent by the RLC layer to a lower layer is referred to as an RLC PDU; and data received by the MAC layer from an upper layer is referred to as a MAC SDU, and data sent by the MAC layer to a lower layer is referred to as a MAC PDU, which is also referred to as a transmission block. In a protocol, layers correspond to each other in a form of channels. The RLC layer corresponds to the MAC layer through a logical channel (logical channel, LCH), the MAC layer corresponds to the physical layer through a transport channel (transport channel), and the physical layer corresponds to a physical layer at another end through a physical channel (physical channel). The physical channel is below the physical layer.

Similar to the access network device, an access stratum of the terminal device also includes an SDAP layer, a PDCP layer, an RLC layer, a MAC layer, and a physical layer. The terminal device further has an application layer and a non-access stratum. The application layer may be configured to provide a service for an application installed on the terminal device. For example, downlink data received by the terminal device may be sequentially transmitted from the physical layer to the application layer, and then provided by the application layer for the application. For another example, the application layer may obtain data generated by the application (for example, a video recorded by a user by using the application), sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

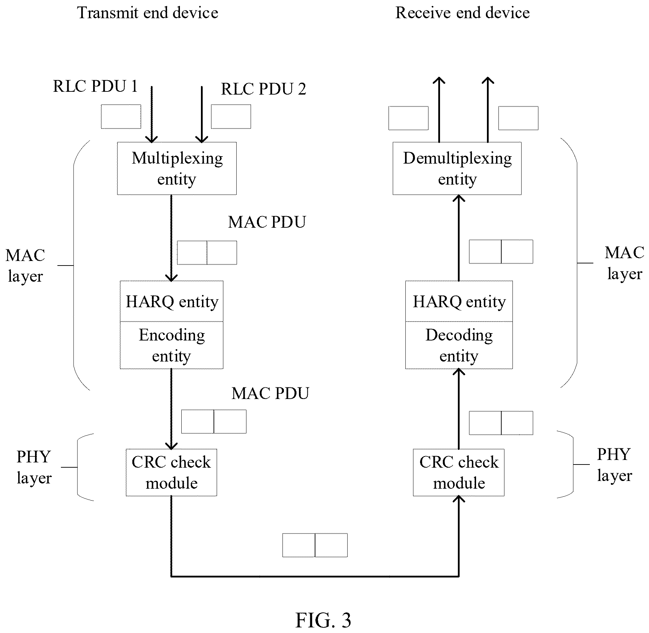

In a downlink data transmission process, specific functions of the MAC layer and the PHY layer are shown in FIG. 3. The MAC layer may include one or more sub-functional entities or modules, for example, a multiplexing entity or a demultiplexing entity, a hybrid automatic repeat request (hybrid automatic repeat request, HARQ) entity, and an encoding or decoding entity. The PHY layer may also include one or more sub-functional entities or modules, for example, a CRC check module. The following separately describes the foregoing sub-functional entity or module from perspectives of a transmit end device and a receive end device. The transmit end device may be a terminal device, and the receive end device may be an access network device; or the transmit end device may be an access network device, and the receive end device may be a terminal device.

For the transmit end device, the MAC layer may include a multiplexing entity, a HARQ entity, and an encoding entity. The multiplexing entity may be configured to multiplex RLC PDUs received from the RLC layer to obtain a MAC PDU, and deliver the MAC PDU to the HARQ entity. One RLC layer entity corresponds to one logical channel, and the RLC PDU may also be referred to as a MAC SDU. There may be a plurality of multiplexing manners, for example, segmentation and concatenation. For example, the multiplexing entity may segment an RLC PDU received from a logical channel 1, for example, segment the RLC PDU into two RLC PDU segments, namely an RLC PDU segment 1 and an RLC PDU segment 2, to obtain a MAC PDU 1 based on the RLC PDU segment 1, and obtain a MAC PDU 2 based on the RLC PDU segment 2. For another example, the multiplexing entity may concatenate an RLC PDU 1 received from a logical channel 1 and an RLC PDU 2 received from a logical channel 2, to obtain one MAC PDU based on concatenated RLC PDU 1 and RLC PDU 2. RLC PDUs from different logical channels may be distinguished by using logical channel identifiers (LCH ID) in MAC PDU headers. FIG. 3 uses concatenation as an example of the multiplexing manner. The HARQ entity may deliver the MAC PDU received from the multiplexing entity to the encoding entity, and the encoding entity encodes the MAC PDU and transmits the encoded MAC PDU to the physical layer. The CRC check module at the PHY layer performs CRC check processing on the MAC PDU received from the MAC layer, and transmits the MAC PDU to the receive end device.

For the receive end device, after receiving data, the CRC check module at the PHY layer may perform CRC check on the data, and if the check is successful, the data may be delivered to the MAC layer. After receiving the MAC PDU delivered by the PHY layer, the decoding entity of the MAC layer may decode the MAC PDU. If the decoding is successful, the MAC layer delivers the MAC PDU to the HARQ entity, and then the HARQ entity delivers the MAC PDU to the demultiplexing entity. The HARQ entity may further send HARQ feedback information. After receiving the MAC PDU, the demultiplexing entity demultiplexes the MAC PDU to obtain a MAC SDU, and delivers the MAC SDU to the RLC layer through a corresponding logical channel.

As described above, in a downlink data transmission process, the CRC check module at the PHY layer of the transmit end device performs CRC check processing on the MAC PDU received from the MAC layer, and transmits the MAC PDU to the receive end device. After receiving the data, the CRC check module at the PHY layer of the receive end device may perform CRC check on the data, and if the check is successful, the data may be delivered to the MAC layer. If the check fails, the PHY layer may discard the data, or wait for retransmission of the data.

In a possible scenario, even if an error occurs during data transmission, interpretation of the data is not affected. In this case, a specific error tolerance rate is allowed for the data, and the CRC check module at the PHY layer of the transmit end device does not need to perform CRC check processing on the MAC PDU received from the MAC layer. Correspondingly, after receiving the data, the CRC check module at the PHY layer of the receive end device may directly deliver the data to the MAC layer without performing CRC check on the data.

For example, in a semantic communication scenario, semantic communication focuses on a meaning expressed by data. The receive end device receives error data, but may infer, based on the received data, a meaning expressed by the data packet. In this case, an error is allowed in a data transmission process as long as a meaning expressed can be determined from the received data, and bit-level or symbol-level accurate transmission is not required in the data transmission process. The PHY layer of the transmit end device does not perform CRC check on to-be-transmitted data, and the PHY layer of the receive end device delivers the received data without performing CRC check, thereby avoiding poor user experience caused by a data packet being discarded or waiting for retransmission due to transmission errors. A high-definition video service is used as an example. If a data packet is discarded or waits for retransmission due to transmission errors, video freezing may be caused, leading to poor user experience. In addition, even error data does not affect the meaning expressed by the data. If the data waits for retransmission, a waste of resources is caused.

In view of this, the technical solutions in embodiments of this application are provided. In this embodiment of this application, for error-tolerant service data, the CRC check module at the PHY layer of the transmit end device does not need to perform CRC check processing on the MAC PDU received from the MAC layer. Correspondingly, after receiving the data, the CRC check module at the PHY layer of the receive end device may directly deliver the data to the MAC layer without performing CRC check on the data. Compared with performing CRC on the first data before delivery, this can avoid a delivery failure of the first data caused by an error in the first data, to obtain an error-tolerant transmission gain of the data. In addition, a latency of service data transmission may be further reduced, or resource overheads may be reduced.

Embodiments of this application relate to two types of services, for example, a first-type service and a second-type service. Compared with the second-type service, the first-type service allows more errors in the data transmission process. For example, the first-type service allows a specific error in the data transmission process, and the second-type service does not allow an error in the data transmission process. Alternatively, a proportion of errors allowed by the first-type service in the data transmission process is greater than a threshold (for example, a first threshold), and a proportion of errors allowed by the second-type service in the data transmission process is less than a threshold (for example, a second threshold). The first threshold is greater than the second threshold. Alternatively, a transmission error rate/a decoding error rate of data allowed by the first-type service is higher than a threshold (for example, a third threshold), and a transmission error rate/a decoding error rate of data allowed by the second-type service is lower than a threshold (for example, a fourth threshold). The third threshold is greater than the fourth threshold. Alternatively, the first-type service does not require a decoding success rate of data in the data transmission process to be higher than a threshold (for example, a fifth threshold), and the second-type service requires a decoding success rate of data in the data transmission process to be higher than a threshold (for example, a sixth threshold). The fifth threshold is less than the sixth threshold. Alternatively, the data of the first-type service has a forward error correction capability (at an application layer), and can tolerate a bit transmission error of the data within a first gate value; and the data of the second-type service does not have a forward error correction capability, and can tolerate a bit transmission error of the data within a second gate value. The first gate value is greater than the second gate value. Alternatively, CRC check does not need to be performed on the data of the first-type service at the PHY layer, and CRC check needs to be performed on the data of the second-type service at the PHY layer.

For example, the second-type service may be a legacy (legacy) communication service, and bit-level or symbol-level accurate transmission is required in the data transmission process. The first-type service may be a semantic communication service, and a specific error is allowed in the data transmission process, and obtaining semantics expressed by the data is not affected.

In embodiments of this application, the first service may be the first-type service, and the second service may be the second-type service. Alternatively, the first service is one first-type service, and the second service is one second-type service. The first data is data of the first service, and the second data is data of the second service. In a downlink data transmission process, the first service is a service that allows erroneous data transmission or delivery, or CRC check is not performed on the data of the first service (that is, the first data) at the PHY layer. CRC check is performed on the data of the second service (that is, the second data) at the PHY layer.

It should be noted that in embodiments of this application, the first data is data generated by application-layer source encoding, and is also referred to as application data or payload (payload), and has an error tolerance capability. Data on which CRC check does not need to be performed at the PHY layer is data generated by application-layer source encoding. At the PHY layer, the first data is data included in a transport block (transport block, TB). In a transmission process of the first data, if bit information of the first data is partially lost or has an error, the application layer can still recover an original meaning expressed by the first data. For example, the first data is image data. If the image data is partially lost or has an error in a transmission process, the receive end may rely on a source decoding method to recover image data that meets a specific service requirement from the received image data. The service requirement is, for example, an image quality requirement. The service requirement may be understood as a gate value used by the receive end to determine whether the received first data is successfully transmitted or fails to be transmitted. This service requirement may also be referred to as a PDU set content criterion (PDU set content criterion).

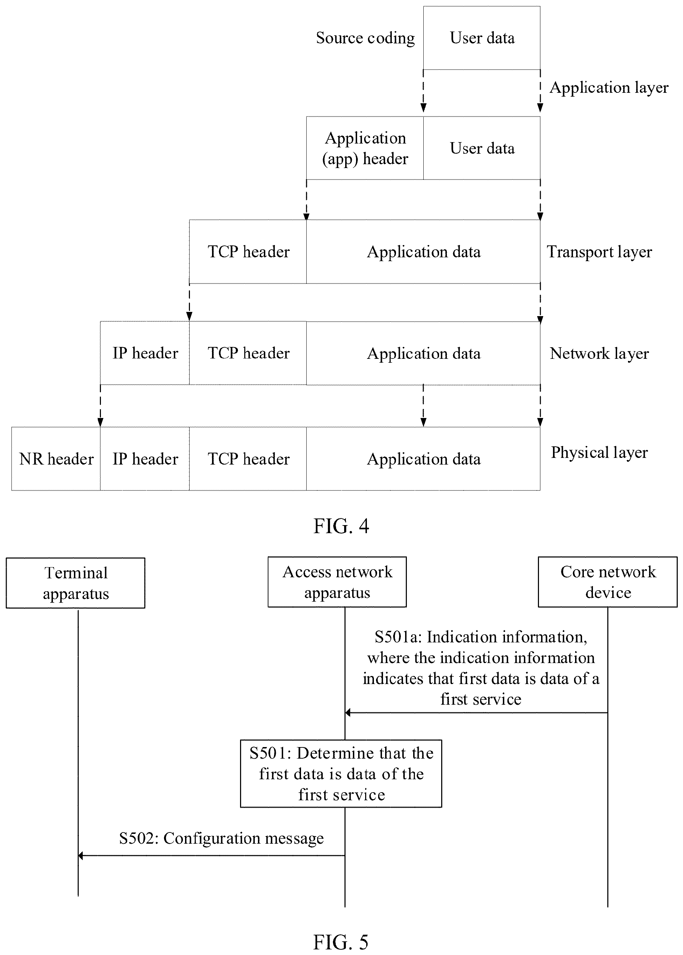

It may be understood that the first data is processed/encapsulated at each protocol layer in a transmission process. For example, after receiving an SDU from an upper layer, a specific layer adds a header of a protocol stack of a current layer to the SDU, generates a PDU after encapsulation, and then sends the PDU to a lower layer. For example, FIG. 4 shows a structure in the transmission process of the first data. The first data may be original user data and an added application (application, app) header. The first data is transmitted from an application layer to a transport layer. The transport layer processes the first data, and adds a TCP header to the first data. The first data to which the TCP header is added is transmitted from the transport layer to a network layer. The network layer adds an IP header to the first data to which the TCP header is added, and transmits, to the physical layer, the first data to which the IP header and the TCP header are added. The physical layer receives, from the network layer, the first data to which the IP header and the TCP header are added, and may continue to add an NR header. As shown in FIG. 4, in embodiments of this application, CRC check does not need to be performed on the application data in FIG. 4, but CRC check still needs to be performed on a part other than the application data, for example, the app header, the TCP header, the IP header, and the NR header.

In embodiments of this application, first data carried by a specific protocol layer is actually an SDU or a PDU that is carried by the protocol layer and that includes the first data. For ease of description, in embodiments of this application, a PDU generated after each protocol layer encapsulates the first data is also referred to as first data. First data carried by different protocol layers is actually different. FIG. 4 is used as an example. The TCP header and the application data at the transport layer may be referred to as the first data. The IP header, the TCP header, and the application data at the network layer are also referred to as the first data. FIG. 2 is used as an example. First data at the PDCP layer is referred to as a PDCP SDU or a PDCP PDU. First data at the RLC layer is referred to as an RLC SDU or an RLC PDU. First data at the MAC layer is referred to as a MAC SDU or a MAC PDU. First data at the PHY layer is referred to as a PHY SDU or a PHY PDU.

In embodiments of this application, that the PHY layer does not need to perform CRC check may be: There is no CRC operation at the PHY layer, or there is no CRC code generated at the PHY layer, or a CRC check module at the PHY layer is turned off, or a function of the CRC check module at the PHY layer is not enabled, or the CRC check module at the PHY layer does not perform CRC check, or whether a data packet received at the PHY layer supports erroneous delivery. In a downlink data transmission process, for an access network apparatus, that the PHY layer does not need to perform CRC check indicates whether the MAC PDU supports erroneous delivery. For a terminal apparatus, that the PHY layer does not need to perform CRC check indicates whether the PHY SDU supports erroneous delivery. If the MAC PDU supports erroneous delivery, but one or some MAC SDUs in the MAC PDU do not support erroneous delivery, after decoding fails, the terminal apparatus may deliver, to an upper layer, a MAC SDU that supports erroneous delivery. For a MAC SDU that does not support erroneous delivery, the terminal apparatus may not deliver the MAC SDU to the upper layer, and deliver the MAC SDU to the upper layer after retransmission is successful.

Alternatively, a check result of the CRC check module at the PHY layer does not affect a PHY PDU delivered by the PHY layer to the MAC layer. That the check result of the CRC check module at the PHY layer does not affect the PHY PDU delivered by the PHY layer to the MAC layer means that the PHY still delivers the PHY PDU to the MAC layer even if the check result of the CRC check module at the PHY layer is erroneous.

That the PHY layer does not need to perform CRC check may be replaced with that the PHY layer supports erroneous delivery. For example, that CRC does not need to be performed on the first data at the PHY layer may be replaced with that the first data supports erroneous delivery. That the first data supports erroneous delivery may include at least one of the following: A service to which the first data belongs supports erroneous delivery; a cell that transmits the first data supports erroneous delivery; and some or all of at least one logical channel that carries the first data supports erroneous delivery. For example, the service to which the first data belongs is a service A. If the service A supports erroneous delivery, the first data supports erroneous delivery. For another example, the service to which the first data belongs is a service A. If the service A supports erroneous delivery, and the cell that transmits the first data supports erroneous delivery, the first data supports erroneous delivery. For another example, the first data includes data from the at least one logical channel. If the at least one logical channel supports erroneous delivery, the first data supports erroneous delivery. For another example, the first data includes data from the at least one logical channel. If some logical channels of the at least one logical channel support erroneous delivery, the first data supports erroneous delivery. In another possible example, the first data includes data from the at least one logical channel. If some logical channels of the at least one logical channel do not support erroneous delivery, the first data may not support erroneous delivery.

In embodiments of this application, the "system" and the "network" may be used interchangeably. "A plurality of" means two or more. In view of this, "a plurality of" may also be understood as "at least two" in embodiments of this application. "At least one" may be one or more, for example, at least one is one, two, or more. For example, "including at least one" means including one, two, or more, and does not limit items that are included. For example, if at least one of A, B, and C is included, A, B, C, A and B, A and C, B and C, or A, B, and C may be included. Similarly, understanding of the description such as "at least one type" is similar. "At least one of the following" or a similar expression means any combination of these items, including any combination of single items or a plurality of items. For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects.

Unless otherwise specified, ordinal numbers such as "first" and "second" in embodiments of this application are used to distinguish between a plurality of objects, and are not used to limit a sequence, a time sequence, priorities, or importance of the plurality of objects. In addition, descriptions such as "first" and "second" do not indicate a definite difference between objects. For example, the first data and the second data represent two pieces of data, and priorities or importance degrees of the two pieces of data is not limited. In embodiments of this application, "if" and "assuming that" may be interchangeable, and unless otherwise specified, "when" and "in a case in which ..." may be interchangeable. "CRC check" and "CRC" may be interchangeable.

The communication method provided in embodiments of this application relates to interaction between two communication apparatuses. The two communication apparatuses are, for example, a first communication apparatus and a second communication apparatus. The first communication apparatus may be a transmit end device, and the second communication apparatus is a receive end device. For example, the first communication apparatus is an access network apparatus, and the second communication apparatus is a terminal apparatus. Steps performed by the access network apparatus may be implemented by the access network device, or may be implemented by a component (a module such as a chip, a processing unit, or a processor) in the access network device. For example, the access network apparatus may be the access network device in FIG. 1, or may be a chip (system) in the access network device in FIG. 1. Steps performed by the terminal apparatus may be implemented by the terminal device, or may be implemented by a component (a module such as a chip, a processing unit, or a processor) in the terminal device. The terminal apparatus may be the terminal device shown in FIG. 1, or may be a chip (system) in the terminal device in FIG. 1.

It should be noted that the method provided in embodiments of this application may be applied to data exchange between two communication ends. Specific implementations of the two communication ends are not limited in embodiments of this application. For example, the transmit end may be a first terminal device, and the receive end may be a second terminal device. In this case, the first terminal device may send data and send a data packet to the second terminal device, where the data supports erroneous delivery. If data transmission is erroneous, the second terminal device may perform erroneous delivery.

When the access network apparatus sends the first data to the terminal apparatus, the access network apparatus may encapsulate the first data, and the first data supports erroneous delivery. The access network apparatus does not perform CRC on the first data at the PHY layer. The access network apparatus sends a PDU including the first data to the terminal apparatus. If the first data is erroneously transmitted, the terminal apparatus may perform erroneous delivery. The terminal apparatus does not know in advance whether CRC needs to be performed on the first data at the PHY layer. If erroneous delivery of the first data is allowed, but the terminal apparatus still performs CRC on the first data at the PHY layer, the first data may fail to be delivered, and an error-tolerant transmission gain of the first data cannot be obtained. Therefore, embodiments of this application provide a solution of indicating, to the terminal apparatus, that CRC does not need to be performed on the first data at the PHY layer.

The following describes, with reference to Embodiment 1, how to indicate to the terminal apparatus that CRC does not need to be performed on the first data at the PHY layer, and describes in detail, with reference to Embodiment 2, behaviors of the access network apparatus at each protocol layer, behaviors of the terminal apparatus at each protocol layer, and interaction between the access network apparatus and the terminal apparatus.

Embodiment 1 describes how an access network apparatus indicates to a terminal apparatus that CRC does not need to be performed on first data at a PHY layer.

FIG. 5 is a schematic flowchart of a first communication method according to an embodiment of this application. FIG. 5 describes the method from a perspective of interaction between the access network apparatus and the terminal apparatus. As shown in FIG. 5, a procedure of the first communication method includes the following steps.

S501: The access network apparatus determines that the first data is data of a first service.

CRC does not need to be performed at a PHY layer on one or more data flows mapped to the first service, but CRC needs to be performed at the PHY layer on a data flow mapped to a second service. Therefore, before sending the first data, the access network apparatus may determine whether the first data is data of the first service. If the first data is data of the first service, the access network apparatus does not perform CRC on the first data at the PHY layer.

There may be a plurality of manners in which the access network apparatus determines that the first data is data of the first service. For example, some terminal apparatuses support the first service, and some terminal apparatuses do not support the first service. After accessing a network, the terminal apparatus registers information with a core network. If the terminal apparatus supports the first service, registration information of the terminal apparatus in the core network may include information about the first service. When the access network apparatus needs to exchange the first data with the terminal apparatus, the core network may indicate to the access network apparatus that the first data is data of the first service.

For example, S501 includes S501a. S501a: The access network apparatus receives indication information, where the indication information indicates that the first data is data of the first service. The indication information may come from the core network. That is, the core network sends the indication information to the access network apparatus. The indication information may be included in a QFI. For example, the QFI may include a first field, and the first field carries the indication information. Alternatively, the indication information may be a QoS identifier, and the QoS identifier includes the QFI.

The indication information may explicitly indicate that the first data is data of the first service, or the indication information may implicitly indicate that the first data is data of the first service. Indicating that the first data is data of the first service may be replaced with indicating that a current service is the first service or a first-type service.

For example, the indication information may include type information of a service corresponding to one or more data flows. If type information of a service corresponding to a specific data flow indicates that a type of a service corresponding to the data flow is the first type, it may be determined that CRC does not need to be performed on data of the data flow at the PHY layer. A data flow A is used as an example, and the data flow A is a data flow of a service A. The indication information includes type information of the service A corresponding to the data flow A. If a type of the service A is a first type, it may be determined that CRC does not need to be performed on the data of the data flow A at the PHY layer.

Alternatively, the indication information may include indication of erroneous delivery of one or more data flows. If erroneous delivery of a specific data flow indicates that the data flow supports erroneous delivery, it may be determined that CRC does not need to be performed on data of the data flow at the PHY layer. For example, the indication information may include service information of one or more services. A service A is used as an example. Service information of the service A includes indication of erroneous delivery of one or more data flows (for example, a data flow A1 and a data flow A2) corresponding to the service A. For example, indication of erroneous delivery of the data flow A1 indicates whether the data flow A1 supports erroneous delivery.

Alternatively, the indication information may include service information of a service corresponding to one or more data flows, and the service information implicitly indicates that CRC does not need to be performed on the first data at the PHY layer. A data flow A is used as an example, and the data flow A is a data flow of a service A. The service information may include an allowed error tolerance rate/transmission error rate of the service A. If the error tolerance rate/transmission error rate is greater than or equal to a threshold for allowing erroneous delivery, the access network apparatus may determine that CRC does not need to be performed on data of the data flow A at the PHY layer.

It should be noted that the service A may be understood as a service of a type or a specific service. This is not specifically limited.

S502: The access network apparatus sends a configuration message to the terminal apparatus.

Correspondingly, the terminal apparatus receives the configuration message from the access network apparatus. When the access network apparatus determines that the first data is data of the first service, the configuration message may further indicate that CRC does not need to be performed on the first data at the PHY layer. In some possible examples, it may be predefined or preconfigured that CRC does not need to be performed on the data received by the terminal apparatus at the PHY layer, so that the access network apparatus may no longer indicate to the terminal apparatus that CRC does not need to be performed on a first data packet at the PHY layer.

There may be a plurality of manners in which the access network device indicates, by using the configuration message, whether CRC does not need to be performed on the first data at the PHY layer. The following describes the manners in sequence.

In an indication manner 1, DCI for scheduling the first data may be associated with a particular control resource set (control-resource set, CORESET) and/or search space (search space, SS), and whether CRC needs to be performed on the first data at the PHY layer is implicitly indicated by configuring the specific control resource set and/or search space.

For example, the configuration message may include information about a first CORESET and/or a first SS. If the DCI for scheduling the first data is in the first control resource set and/or the first search space, the configuration message may indicate that CRC does not need to be performed on the first data at the PHY layer. If the DCI for scheduling the first data is not received in the first control resource set and/or the first search space, the configuration message may indicate that CRC needs to be performed on the first data at the PHY layer. Alternatively, whether CRC needs to be performed on the first data at the PHY layer may be indicated by indicating a resource scheduled by using the DCI for scheduling the first data. For example, a resource scheduled by using the DCI carried in the first control resource set and/or the first search space carries data on which CRC does not need to be performed at the PHY layer.

In an indication manner 2, DCI for scheduling the first data may be associated with a particular scrambling parameter, and whether CRC needs to be performed on the first data at the PHY layer is implicitly indicated by configuring the specific scrambling parameter.

For example, a configuration message may include information about a first scrambling parameter. If the DCI for scheduling the first data is scrambled by using the first scrambling parameter, the configuration message may indicate that CRC does not need to be performed on the first data at the PHY layer. If the DCI for scheduling the first data is not scrambled by using the first scrambling parameter, the configuration message may indicate that CRC needs to be performed on the first data at the PHY layer. The first scrambling parameter may be predefined or (pre)configured. For example, the first scrambling parameter may be a predefined radio network temporary identifier (radio network temporary identifier, RNTI) or a particular scrambling ID.

In an indication manner 3, whether CRC needs to be performed on the first data at the PHY may be explicitly indicated by using DCI for scheduling the first data.

For example, a configuration message may include first DCI for scheduling the first data. If the first DCI carries indication information 1, it indicates that CRC does not need to be performed on the first data at the PHY layer. On the contrary, if the first DCI does not carry the indication information 1, it indicates that CRC needs to be performed on the first data at the PHY layer. Alternatively, if the first DCI carries indication information 2, and the indication information 2 occupies one bit, if a value of the bit is a first value, it indicates that CRC does not need to be performed on the first data at the PHY layer. On the contrary, if a value of the bit is a second value, it indicates that CRC needs to be performed on the first data at the PHY layer.

The indication information 1 or the indication information 2 may be carried in one or more fields of the first DCI, for example, carried in one or more of a HARQ process number (HARQ process number) indicator field, a modulation and coding scheme (modulation and coding scheme, MCS) indicator field, a frequency domain resource assignment (frequency domain resource assignment) indicator field, a time domain resource assignment (time domain resource assignment) indicator field, and a reserved field of the DCI-2. An example in which the indication information 1 or the indication information 2 is carried in the MCS indicator field of the DCI is used. For example, the MCS indicator field includes five bits, and there are 32 (2⁵) code points in total, where specific meanings of 25 code points are specified, and the remaining seven code points are reserved code points. Therefore, one or more code points in the remaining seven code points may indicate whether CRC needs to be performed on the first data at the PHY layer.

In an indication manner 4, whether CRC needs to be performed on the first data at the PHY layer is implicitly indicated by configuring a particular resource.

For example, it may be agreed that CRC does not need to be performed at the PHY layer on data scheduled by using DCI received on a particular resource. For example, a configuration message may include information about a first time domain resource and/or information about a first frequency domain resource. If the DCI for scheduling the first data is received on the first time domain resource and/or the first frequency domain resource, CRC does not need to be performed at the PHY layer on the first data scheduled by using the DCI. On the contrary, if the DCI for scheduling the first data is not received on the first time domain resource and/or the first frequency domain resource, CRC needs to be performed at the PHY layer on the first data scheduled by using the DCI.

For example, it may be agreed that CRC does not need to be performed at the PHY layer on data carried on a particular resource. For example, the configuration message may include SPS information, and CRC does not need to be performed at the PHY layer on data carried on a time-frequency resource indicated by the SPS information. If the first data is carried on the time-frequency resource indicated by the SPS information, CRC does not need to be performed on the first data at the PHY layer.

It should be noted that, for the SPS, whether CRC needs to be performed at the PHY layer on data carried on an SPS resource may be indicated by using the DCI. Alternatively, an RRC message used to configure a period may indicate whether CRC needs to be performed at the PHY layer on the data carried on the SPS resource.

For example, a maximum of eight sets of SPS resources may be configured on one bandwidth part (bandwidth part, BWP). When the RRC message indicates whether CRC needs to be performed at the PHY layer on the data carried on the SPS resource, whether CRC needs to be performed at the PHY layer on data carried on each set of SPS resources may be separately indicated. For example, if it is indicated in the RRC message that CRC does not need to be performed at the PHY layer on data carried on a specific set of SPS resources, no indication may be required in the DCI for activating the set of SPS resources. As long as the set of SPS resources is activated, CRC does not need to be performed at the PHY layer on data transmitted on the set of SPS resources. Alternatively, whether CRC needs to be performed at the PHY layer on data carried on all SPS resources may be configured in a unified manner. For example, if it is indicated in the RRC message that CRC does not need to be performed at the PHY layer on the data carried on the SPS resource, no indication may be required in the DCI for activating the SPS resource. As long as any set of SPS resources is activated, CRC does not need to be performed at the PHY layer on the data transmitted on the set of SPS resources.

The configuration message may include one or more types of information in the indication manner 1 to the indication manner 4. The configuration message may explicitly or implicitly indicate that CRC does not need to be performed on the first data at the PHY layer, so that no additional resource is required to indicate that CRC does not need to be performed on the first data at the PHY layer, thereby effectively saving transmission resources.

It may be understood that the configuration message may be further used to configure a data radio bearer (data radio bearer, DRB) of the first data. For example, the configuration message includes information about the DRB and information about a cell group (CellGroup). The DRB mainly includes a PDCP layer entity and an RLC layer entity. The cell group may include a MAC layer entity and a group of logical channels having related RLC layer entities.

Because there is a correspondence between a data flow and a logical channel, the access network apparatus may implicitly indicate, by using the logical channel, whether CRC does not need to be performed on the first data at the PHY layer.

For the first-type service, a dedicated logical channel may be configured. For example, the configuration message includes information about a first logical channel, and the first logical channel is used to carry the first data. If the first logical channel is a logical channel dedicated to carrying a data flow of the first-type service, the first logical channel cannot be used to carry a data flow of the second-type service. If the logical channel configured by using the configuration message is a logical channel dedicated to carrying the data flow of the first-type service, the terminal apparatus may determine, based on the configuration message, that CRC does not need to be performed at the PHY layer on data carried on the configured logical channel. On the contrary, CRC needs to be performed at the PHY layer on data carried on a logical channel other than the logical channel dedicated to carrying the data flow of the first-type service. For example, CRC does not need to be performed on data of a service A at the PHY layer, and CRC needs to be performed on data of a service B at the PHY layer. A logical channel 1 is a logical channel dedicated to carrying the data flow of the first-type service, and a logical channel 2 is a logical channel dedicated to carrying the data flow of the second-type service. If the data sent by the access network apparatus to the terminal apparatus is data of the service A, the configuration message may include information about the logical channel 1.

Alternatively, the logical channel used to carry the data flow of the first-type service may be a part of the logical channel used to carry the data flow of the second-type service. Alternatively, one logical channel may be used to carry the first data, or may be used to carry the second data. For example, IDs of logical channels used to carry the data flow of the second-type service form a first set. IDs of logical channels used to carry the data flow of the first-type service form a second set, and the second set is a subset of the first set. CRC does not need to be performed at the PHY layer on data carried on one or more logical channels corresponding to the second set. On the contrary, CRC needs to be performed at the PHY layer on data carried on one or more logical channels corresponding to the IDs in the first set other than the second set.

It should be noted that data of each service may be mapped to one or more data flows (flow). For a same service, CRC may not be performed on some data flows at the PHY layer, and CRC may be performed on some data flows at the PHY layer. In this case, the configuration message may be used to configure whether CRC needs to be performed on one or more data flows at the PHY layer. Because there is a correspondence between a data flow and a logical channel, the configuration message may also be used to configure whether CRC needs to be performed at the PHY layer on a data flow carried on one or more logical channels. For example, the data of the service A may be mapped to the data flow A1 and the data flow A2. CRC does not need to be performed on the data flow A1 at the PHY layer, and CRC needs to be performed on the data flow A2 at the PHY layer. CRC does not need to be performed at the PHY layer on data carried on the logical channel 1, and CRC needs to be performed at the PHY layer on data carried on the logical channel 2. In this case, the logical channel 1 may be configured for the data flow A.

In Embodiment 2, an access network apparatus sends first data to a terminal apparatus, and correspondingly, the terminal apparatus receives the first data from the access network apparatus.

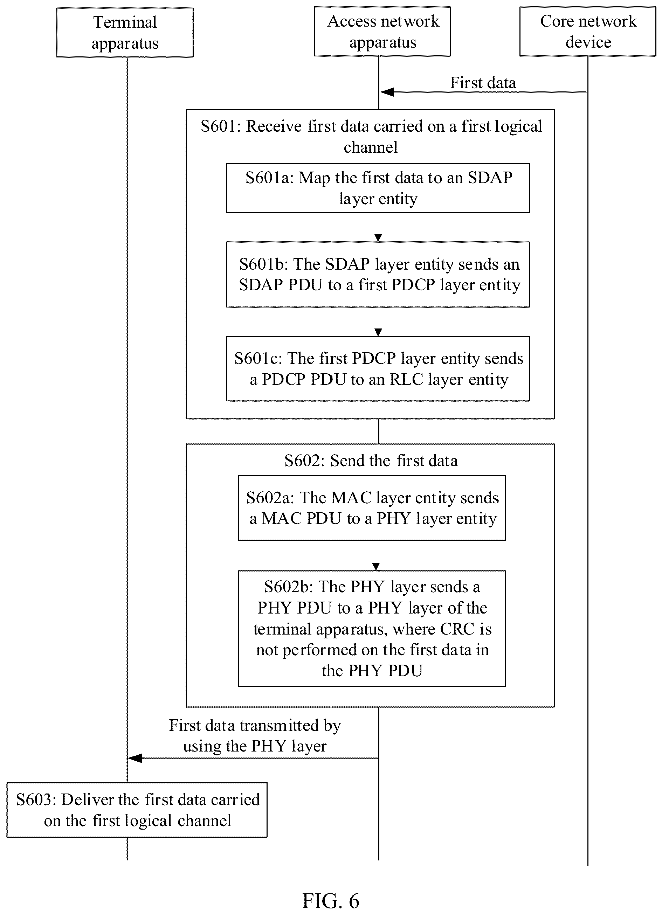

FIG. 6 is a schematic flowchart of a second communication method according to an embodiment of this application. FIG. 6 describes the method from a perspective of interaction between the access network apparatus and the terminal apparatus. As shown in FIG. 6, a procedure of the second communication method includes the following steps.

S601: The access network apparatus receives the first data carried on a first logical channel.

That the access network apparatus receives the first data carried on the first logical channel actually means that a MAC layer entity of the access network apparatus receives the first data carried on the first logical channel. The first data carried on the first logical channel is actually an RLC PDU that is carried on the first logical channel and that includes the first data. It may be understood that after obtaining original first data, the access network apparatus may process/encapsulate the first data at each protocol layer based on a configuration message in the related embodiment in FIG. 5 and the protocol layer structure shown in FIG. 2, and then send a PHY PDU obtained at a PHY layer to a PHY layer entity of the terminal apparatus.

S601 may include S601a to S601c. The following separately describes S601a to S601c.

S601a: The access network apparatus maps the first data to an SDAP layer entity.

After receiving the first data, the SDAP layer entity adds an SDAP header to the first data, generates an SDAP PDU, and sends the SDAP PDU to a PDCP layer entity, for example, a first PDCP layer entity.

S601b: The SDAP layer entity of the access network apparatus sends the SDAP PDU to the first PDCP layer entity.

The access network apparatus may map, to the first PDCP layer entity by using the SDAP layer entity, a QoS flow to which the first data belongs. The first PDCP entity adds a PDCP header to the SDAP PDU, generates a PDCP PDU, and sends the PDCP PDU to an RLC layer entity. It may be understood that the PDCP PDU includes the first data, the SDAP header, and the PDCP header.

Because the first service is a service that allows erroneous data transmission or delivery, CRC check does not need to be performed on the first data. Correspondingly, the first PDCP layer entity does not need to perform integrity protection check on the first data. That the first PDCP layer entity does not perform integrity protection check on the first data includes the following two aspects.

In one aspect, the first PDCP layer entity has an integrity protection check function. In this case, the integrity protection check function of the first PDCP layer entity may not be turned on or may not be enabled. That is, the integrity protection check function of the first PDCP layer entity is not turned on or not enabled. Alternatively, for the first data/the first-type service, the integrity protection check function of the first PDCP layer entity fails. When the first PDCP layer entity has the integrity protection check function, the first PDCP layer entity may determine, based on the first data, whether to perform integrity protection check on the first data. In the other aspect, for the first data/the first-type service, the first PDCP layer entity does not support the integrity protection check function, or the first PDCP layer entity does not have the integrity protection check function. Alternatively, for the first data/the first-type service, the integrity protection check function of the first PDCP layer entity fails.

When the integrity protection check function of the PDCP layer entity of the access network apparatus is not turned on or is not enabled, or the PDCP layer entity does not support the integrity protection check function, the SDAP layer entity of the access network apparatus can map only the data of the first-type service, but cannot map the data of the second-type service. The first data is used as an example. The SDAP layer entity of the access network apparatus maps, only to the first PDCP layer entity, the QoS flow to which the first data belongs.

S601c: The first PDCP layer entity of the access network apparatus sends the PDCP PDU to the RLC layer entity.

After receiving the PDCP PDU, the RLC layer entity maps the PDCP PDU to the first logical channel, and adds an RLC header to the PDCP PDU, to generate the RLC PDU. That the RLC layer entity maps the PDCP PDU to the first logical channel may also be considered as that the RLC layer entity maps the first data to the first logical channel. The RLC layer entity sends the generated RLC PDU to the MAC layer entity.

S602: The access network apparatus sends the first data.

That the access network apparatus sends the first data actually means that the MAC layer entity of the access network apparatus sends the first data to the PHY layer entity, and the PHY layer of the access network apparatus sends the first data to the PHY layer entity of the terminal apparatus. S602 includes S602a and S602b.

S602a: The MAC layer entity of the access network apparatus sends a MAC PDU to the PHY layer entity.

After receiving the RLC PDU, the MAC layer entity of the access network apparatus adds a MAC header to the RLC PDU to generate the MAC PDU, and then sends the generated MAC PDU to the PHY layer of the access network apparatus. A multiplexing entity in the MAC layer entity of the access network apparatus may multiplex data received from at least one logical channel. The access network apparatus may further send, to the terminal apparatus, data on which CRC needs to be performed at the PHY layer, for example, second data. It may be understood that CRC is performed on the second data at the PHY layer. In this case, if the MAC layer entity multiplexes the first data and the second data, an error tolerance conflict may be caused. Therefore, in embodiments of this application, if the MAC layer entity receives the second data in addition to the first data, the MAC PDU includes the first data, but does not include the second data. Alternatively, the MAC layer entity of the access network apparatus does not combine, into one MAC SDU, data on which CRC does not need to be performed at the PHY layer and data on which CRC needs to be performed at the PHY layer.

The MAC layer entity of the access network apparatus may combine, into one MAC SDU, a plurality of pieces of data on which CRC does not need to be performed at the PHY layer, or may combine, into one MAC SDU, a plurality of pieces of data on which CRC needs to be performed at the PHY layer. For example, if the access network apparatus further receives third data of the first service in addition to the first data, CRC does not need to be performed on the third data at the PHY layer. The MAC layer entity of the access network apparatus receives, from the at least one logical channel, the RLC PDU including the first data and an RLC PDU including the third data. The MAC layer entity of the access network apparatus may multiplex the first data and the third data. For example, the MAC layer entity of the access network apparatus may combine, into one MAC SDU, the RLC PDU including the first data and the RLC PDU including the third data.

S602b: The PHY layer of the access network apparatus sends the PHY PDU to the PHY layer of the terminal apparatus.

Because CRC does not need to be performed on the first data at the PHY layer, the PHY layer entity of the access network apparatus does not perform CRC on the first data in the MAC PDU, or CRC is not performed on the first data included in the MAC SDU. Alternatively, regardless of a check result of the CRC check module, the PHY layer entity of the access network apparatus sends the PHY PDU to the PHY layer of the terminal apparatus. Alternatively, the PHY PDU sent by the PHY layer of the access network apparatus to the PHY layer of the terminal apparatus does not include CRC code for the first data. The PHY layer of the access network apparatus adds a PHY header to the MAC PDU and sends the MAC PDU to the PHY layer of the terminal apparatus.

S603: The terminal apparatus delivers the first data carried on the first logical channel.

That the terminal apparatus delivers the first data carried on the first logical channel actually means that the PHY layer entity of the terminal apparatus receives the PHY PDU from the PHY layer of the access network apparatus, and then the PHY PDU passes through the MAC layer entity, the RLC layer entity, the PDCP layer entity, the SDAP layer entity, a non-access stratum, and an application layer in sequence. For example, the terminal apparatus may determine, based on configuration information, that CRC check does not need to be performed on the first data in the PHY PDU at the PHY layer, and the PHY layer entity of the terminal apparatus may directly deliver the first data to the MAC layer entity. Alternatively, regardless of a check result of the CRC check module, the PHY layer entity of the terminal apparatus sends the PHY PDU to the PHY layer of the network end apparatus. Alternatively, the PHY PDU sent by the PHY layer of the terminal apparatus to the PHY layer of the access network apparatus does not include CRC code for the first data.

Alternatively, in addition to performing CRC on the first data at the PHY layer, the terminal apparatus also performs erroneous delivery of the first data at another layer. That the terminal apparatus performs erroneous delivery of the first data includes at least one of the following: (1) A HARQ entity of the terminal device performs erroneous delivery of the first data; (2) A demultiplexing entity of the terminal device performs erroneous delivery of the first data; (3) The RLC layer entity of the terminal device performs erroneous delivery of a first data packet; and (4) The PDCP layer entity of the terminal device performs erroneous delivery of the first data. It may be understood that, that the terminal device performs erroneous delivery of the first data may further include: Another layer entity performs erroneous delivery of the first data packet. For example, the SDAP layer entity performs erroneous delivery of the first data. For example, when performing erroneous delivery of the first data, each entity described above may notify an upper layer that the first data is erroneously transmitted.

The following describes in detail that different entities in the foregoing perform erroneous delivery of the first data.
(1) The HARQ entity performs erroneous delivery of the first data.

The HARQ entity may deliver the first data to the demultiplexing entity without relying on a result of a decoding entity. Even if a decoding result of the decoding entity indicates that the first data is erroneously transmitted, the HARQ entity still delivers the first data to the demultiplexing entity. Alternatively, the HARQ entity may deliver the first data and the decoding result of the decoding entity together to the demultiplexing entity. The decoding result of the decoding entity may indicate that the first data is erroneously transmitted. For example, the decoding result indicates a decoding success rate of the first data. For example, the decoding success rate is 30% or 50%. For another example, the decoding result indicates a transmission error rate of the first data. For example, the transmission error rate is 70% or 50%.

For example, even if a decoding error rate of the first data is greater than a specific threshold, for example, a first threshold, the HARQ entity still delivers the first data to the demultiplexing entity. For example, the first threshold may be 20%. After receiving the first data, if it is determined that the decoding error rate reaches 30% (greater than the first threshold), the terminal apparatus delivers the first data to the demultiplexing entity. After receiving the first data (the first data is a first retransmission of a specific piece of data), the terminal apparatus may combine the first data and data in a HARQ buffer for decoding. If the decoding error rate reaches 25% (greater than the first threshold), the terminal apparatus delivers the first data to the demultiplexing entity, and updates the data in the HARQ buffer to a previous combination result. The first threshold may be specified in a protocol, or may be determined by the access network apparatus. Further, the access network apparatus may further send the first threshold to the terminal apparatus.

It should be noted that after the HARQ entity delivers the erroneously transmitted first data to the demultiplexing entity, if the HARQ entity receives a retransmission of the first data, the HARQ entity may no longer deliver the retransmission of the first data to the demultiplexing entity. It may be understood that, when a service has a high latency requirement, retransmission may fail to meet the latency requirement of the service. Therefore, the retransmission of the erroneously transmitted first data does not need to be delivered to the demultiplexing entity, thereby reducing processing load of an upper layer. Alternatively, after the HARQ entity delivers the erroneously transmitted first data to the demultiplexing entity, the HARQ entity receives the retransmission of the first data, and the retransmission of the first data is correctly transmitted. In this case, the HARQ entity may deliver the retransmission of the first data to the demultiplexing entity. Alternatively, after the HARQ entity delivers the erroneously transmitted first data to the demultiplexing entity, if receiving the retransmission of the first data, the HARQ entity no longer delivers the first data to the demultiplexing entity regardless of whether the retransmission of the first data is correctly transmitted.

For the erroneously transmitted first data, the HARQ entity may perform corresponding feedback based on whether the first data is delivered to the demultiplexing entity. For example, if the HARQ entity delivers the erroneously transmitted first data to the demultiplexing entity, the HARQ entity may no longer feed back an acknowledgment (acknowledgement, ACK) or a negative acknowledgement (negative acknowledgement, NACK) for the first data, that is, does not perform feedback. For another example, if the HARQ entity delivers the erroneously transmitted first data to the demultiplexing entity, the HARQ entity may feed back an ACK for the first data; or if the HARQ entity does not deliver the first data, the HARQ entity may feed back a NACK for the first data or may not perform feedback. For another example, if the HARQ entity delivers the erroneously transmitted first data to the demultiplexing entity, the HARQ entity does not perform feedback; or if the HARQ entity does not deliver the first data, the HARQ entity may feed back a NACK for the first data. Alternatively, the HARQ entity may perform corresponding feedback based on whether the first data is correctly transmitted. For example, if determining that the first data is correctly transmitted, the HARQ entity feeds back an ACK; or if determining that the first data is erroneously transmitted, the HARQ entity feeds back a NACK or does not perform feedback. For another example, if determining that the first data is correctly transmitted, the HARQ entity does not perform feedback, or if determining that the first data is erroneously transmitted, the HARQ entity feeds back a NACK.

(2) The demultiplexing entity performs erroneous delivery of the first data.

The demultiplexing entity may deliver the first data to the RLC layer entity. When the first data is erroneously transmitted, the demultiplexing entity may further notify the RLC entity that the first data is erroneously transmitted. For example, the demultiplexing entity may deliver the first data and error indication information to the RLC layer entity, where the error indication information indicates that the first data is erroneously transmitted. Herein, if the first data is a MAC PDU delivered by the HARQ entity, after receiving the MAC PDU delivered by the HARQ entity, the demultiplexing entity may demultiplex the MAC PDU into one or more MAC SDUs, and deliver the one or more MAC SDUs to the RLC layer entity.

For example, the MAC PDU includes a MAC SDU 1, and the MAC SDU 1 includes the first data. Even if a logical channel corresponding to the MAC SDU 1 is a logical channel dedicated to carrying the data of the first-type service, the demultiplexing entity still delivers the MAC SDU 1 to the RLC layer entity.

The demultiplexing entity may determine the logical channel corresponding to the MAC SDU 1 in a plurality of manners. For example, the demultiplexing entity may parse a MAC subheader of the MAC SDU to obtain a logical channel identifier corresponding to the MAC SDU 1. For another example, the demultiplexing entity may obtain the logical channel identifier corresponding to the MAC SDU 1 from DCI or obtain the logical channel identifier corresponding to the MAC SDU 1 from an upper-layer configuration message. A manner in which the demultiplexing entity obtains the logical channel identifier is not limited in embodiments of this application. The following uses an example in which the demultiplexing entity obtains the logical channel identifier by parsing the MAC subheader of the first data packet for description.

When delivering the MAC SDU 1 to the RLC layer entity, the demultiplexing entity may further indicate to the RLC entity that the first data in the MAC SDU 1 is erroneously transmitted.

For example, the MAC SDU 1 corresponds to a logical channel 1, and the logical channel 1 supports erroneous delivery. In this case, the demultiplexing entity obtains, through parsing, that the logical channel corresponding to the MAC SDU 1 is the logical channel 1, and may deliver the MAC SDU 1 and the error indication information to an RLC layer entity 1 by using the logical channel 1. The error indication information indicates that the first data in the MAC SDU 1 is erroneously transmitted.

For another example, the demultiplexing entity parses the MAC SDU to obtain at least one logical channel, where the at least one logical channel includes a logical channel that supports erroneous delivery, for example, the logical channel 1. In this case, the demultiplexing entity may deliver the MAC SDU 1 and the error indication information to the RLC layer entity 1 by using the logical channel 1, where the error indication information indicates that the first data in the MAC SDU 1 is erroneously transmitted.

(3) The RLC layer entity and the PDCP layer entity perform erroneous delivery of the first data.

Similar to the PDCP layer entity of the access network apparatus, an integrity protection check function of the PDCP layer entity of the terminal apparatus is not turned on or is not enabled. Alternatively, the PDCP layer entity does not support the integrity protection check function.

When the RLC layer entity or the PDCP layer entity receives a MAC SDU (for example, the MAC SDU 1) from the MAC layer, and the MAC layer indicates that the MAC SDU 1 is an erroneously transmitted data packet, the RLC layer entity or the PDCP layer entity may move windows of respective layers based on an RLC sequence number (sequence number, SN) and a PDCP SN. In other words, the RLC layer entity may move a window of the RLC SN, and the PDCP layer entity may move a window of the PDCP SN.

When the RLC layer entity or the PDCP layer entity receives the MAC SDU 1 from the MAC layer, and the MAC layer indicates that the MAC SDU 1 is an erroneously transmitted data packet, the RLC layer entity or the PDCP layer entity may move the windows of the respective layers based on the RLC sequence number (sequence number, SN) and the PDCP SN if determining that the MAC SDU 1 is received for the first time. If determining that the MAC SDU 1 is not received for the first time (for example, the MAC SDU 1 may be received for the second time or the third time), the RLC layer entity or the PDCP layer entity may no longer move the windows of the respective layers based on the RLC SN and the PDCP SN, to avoid an error caused by moving a window for a same MAC SDU a plurality of times. For example, even if the MAC SDU 1 received for the second or third time is correctly transmitted, the RLC layer entity or the PDCP layer entity may no longer move the windows of the respective layers based on the RLC SN and the PDCP SN.

In addition, for performing erroneous delivery of the first data, it should be further noted that:
(1) When the RLC layer entity receives a MAC SDU (for example, the MAC SDU 1) from the MAC layer, and the MAC layer indicates that the MAC SDU 1 is a data packet that is erroneously transmitted (or fails to be decoded), the RLC layer entity may deliver the first data to the upper PDCP layer entity.
(2) If the RLC layer entity receives a same MAC SDU from the MAC layer a plurality of times, and the MAC layer indicates a transmission error (or a decoding failure) each time, the RLC layer entity may deliver the MAC SDU to the PDCP layer entity each time; or the RLC layer entity may deliver the MAC SDU to the PDCP layer entity for first N times, and does not deliver the MAC SDU subsequently. A value of N may be determined by the access network apparatus. Further, the access network apparatus may further indicate a value of N to the terminal apparatus. Alternatively, the RLC layer entity may deliver the MAC SDU to the PDCP layer entity when receiving a message that the MAC layer indicates that a decoding error rate is greater than a specific gate value (the gate value may be agreed on in a protocol or may be determined by the access network apparatus, and the access network apparatus may further send a value of the gate value to the terminal apparatus).
(3) The PDCP layer entity receives an SDU from the RLC, and delivers a PDU to the SDAP layer. The PDCP layer entity does not perform integrity protection check on the first data included in the RLC SDU. For example, an integrity protection check function of the PDCP layer entity of the terminal apparatus is not turned on or is not enabled. Optionally, the PDCP layer entity may further indicate to the SDAP layer that the first data delivered by the PDCP layer entity is erroneously transmitted data.

The SDAP layer entity receives an SDU from the PDCP, and delivers a PDU to an upper layer (for example, an application layer). Optionally, the PDCP layer entity may further indicate to the upper layer that the first data delivered by the PDCP layer entity is erroneously transmitted data.

In a possible implementation, a verification method different from CRC at the PHY layer may be predefined or agreed on. For example, a first verification method is predefined or agreed on. The first verification method may be a verification method for verifying a transmission error rate of the first data. The terminal apparatus verifies the first data according to the first verification method, thereby determining the transmission error rate of the first data, and helping parse a meaning represented by the first data. If the terminal apparatus is required to determine the transmission error rate of the first data, the access network apparatus may send indication information to the terminal apparatus. The indication information may indicate the first verification method.

Embodiment 1 and Embodiment 2 may be separately implemented, or may be implemented in combination. To be specific, the access network apparatus in Embodiment 1 and the access network apparatus in Embodiment 2 may be different access network apparatuses, and the terminal apparatus in Embodiment 1 and the terminal apparatus in Embodiment 2 may be different terminal devices. Alternatively, the access network apparatus in Embodiment 1 and the access network apparatus in Embodiment 2 may be a same access network apparatus, and the terminal apparatus in Embodiment 1 and the terminal apparatus in Embodiment 2 may be a same terminal apparatus.

The configuration message in embodiments of this application may be sent to the terminal apparatus in a plurality of manners, for example, by using RRC signaling. This is not specifically limited.

In embodiments provided in this application, the method provided in embodiments of this application is described from a perspective of interaction between the terminal apparatus and the access network apparatus. Steps performed by the access network apparatus may also be separately implemented by different communication apparatuses. For example, the first apparatus is configured to generate a configuration message, and the second apparatus is configured to send the configuration message. In other words, the first apparatus and the second apparatus jointly complete the steps performed by the access network apparatus in embodiments of this application. A specific division manner is not limited in this application. When the network architecture includes one or more DUs, one or more CUs, and one or more radio frequency units (radio unit, RU), the steps performed by the access network apparatus may be separately implemented by the DU, the CU, and the RU. To implement functions in the methods provided in embodiments of this application, the terminal apparatus and the access network apparatus may include a hardware structure and/or a software module, to implement the functions in a form of a hardware structure, a software module, or a combination of the hardware structure and the software module. Whether one of the foregoing functions is performed by using the hardware structure, the software module, or the combination of the hardware structure and the software module depends on particular applications and design constraints of the technical solutions.

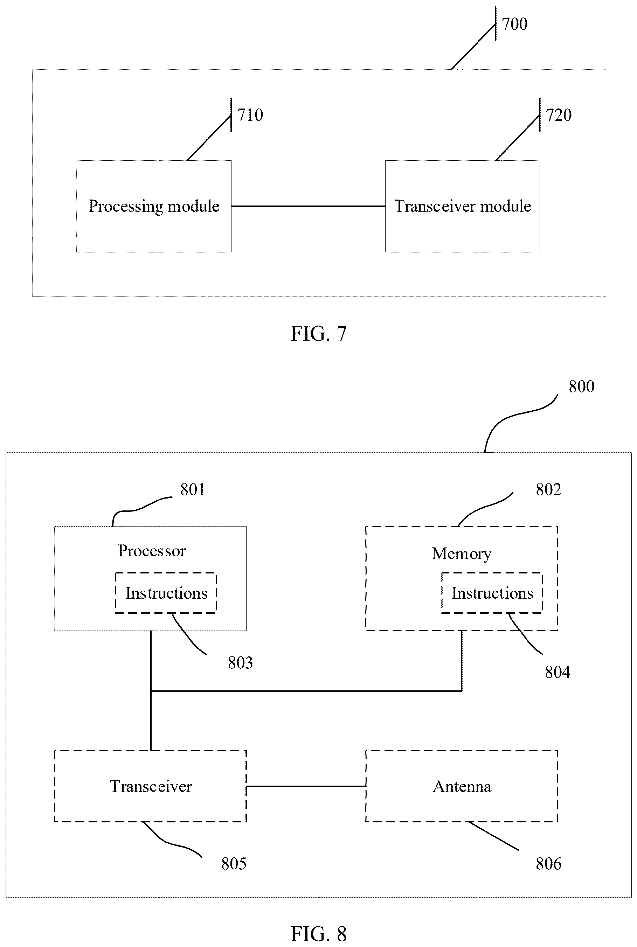

FIG. 7 is a block diagram of a communication apparatus 700 according to an embodiment of this application. The communication apparatus 700 may correspondingly implement functions or steps implemented by the terminal apparatus or the access network apparatus in the foregoing method embodiments. The communication apparatus 700 may include a processing module 710 and a transceiver module 720. Optionally, a storage unit may be further included. The storage unit may be configured to store instructions (code or a program) and/or data. The processing module 710 and the transceiver module 720 may be coupled to the storage unit. For example, the processing module 710 may read the instructions (the code or the program) and/or the data in the storage unit, to implement a corresponding method. The foregoing units may be independently disposed, or may be partially or completely integrated.

It should be understood that the processing module 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 720 is an interface circuit of the apparatus, and is configured to receive a signal from another apparatus. For example, when the apparatus is implemented in a form of a chip, the transceiver module 720 is an interface circuit used by the chip to receive a signal from another chip or apparatus, or is an interface circuit used by the chip to send a signal to another chip or apparatus.

The communication apparatus 700 may be the access network apparatus or the terminal apparatus in the foregoing embodiments, or may be a functional module in the access network device or the terminal device. For example, the communication apparatus is a chip (system) in the access network device or the terminal device. When the communication apparatus 700 is an access network device or a terminal device, the processing module 710 may be, for example, a processor, and the transceiver module 720 may be, for example, a transceiver. Optionally, the transceiver may include a radio frequency circuit, and the storage unit may be, for example, a memory. For example, when the communication apparatus 700 is the chip used in the access network device or the terminal device, the processing module 710 may be, for example, a processor, and the transceiver module 720 may be, for example, an input/output interface, a pin, or a circuit. The processing module 710 may execute computer-executable instructions stored in the storage unit. Optionally, the storage unit is a storage unit in the chip, for example, a register or a buffer. Alternatively, the storage unit may be a storage unit that is in the access network device or the terminal device and that is located outside the chip, for example, a read-only memory (read-only memory, ROM), another type of static storage device that can store static information and instructions, or a random access memory (random access memory, RAM).

In some possible implementations, the communication apparatus 700 can correspondingly implement behaviors and functions of the access network apparatus in the foregoing method embodiments, for example, implement the methods performed by the access network apparatus in embodiments in FIG. 5 and/or FIG. 6. The communication apparatus 700 may be an access network device, or may be a component (for example, a chip or a circuit) used in the access network device, or may be a chip or a chip set in the access network device or a part that is of the chip and that is configured to perform a related method function. For example, the transceiver module 720 may be configured to perform S502 in the embodiment shown in FIG. 5, and/or configured to support another process of the technology described in this specification. The processing module 710 is configured to perform S501 in the embodiment shown in FIG. 5, and/or configured to support another process of the technology described in this specification. For another example, the transceiver module 720 may be configured to perform S601 and S602 in the embodiment shown in FIG. 6, and/or configured to support another process of the technology described in this specification. The processing module 710 is configured to perform another process of the technology described in this specification in the embodiment shown in FIG. 6.

For example, the transceiver module 720 is configured to: send a configuration message, receive first data carried on a first logical channel, and send the first data. The configuration message indicates that CRC does not need to be performed on the first data at a PHY layer. The first data is data of a first service, the first service is a service that allows erroneous data transmission or delivery, and CRC is not performed on the first data.

In a possible implementation, before the transceiver module 720 receives the first data carried on the first logical channel, the processing module 710 is configured to map, only to a first PDCP layer entity by using an SDAP layer entity, a QoS flow to which the first data belongs.

In a possible implementation, an integrity protection check function of the first PDCP layer entity is not turned on.

In a possible implementation, the transceiver module 720 is further configured to receive second data carried on a second logical channel and then send the second data, where CRC is performed on the second data.

In a possible implementation, before sending the first data, the transceiver module 720 is further configured to send a PHY PDU to the PHY layer by using a MAC layer entity, where the PHY PDU includes the first data and does not include the second data.

In a possible implementation, the configuration message is one or more of the following: information about a first search space, a first scrambling parameter, SPS information, or information included in first DCI. DCI for scheduling the first data is located in the first search space; the DCI for scheduling the first data is scrambled by using the first scrambling parameter; the first data is transmitted on a time-frequency resource configured by using the SPS information; or the first DCI is used to schedule the first data.

In a possible implementation, that the first service is a service that allows erroneous data transmission or delivery includes: A transmission error rate of the data allowed by first service is greater than a first threshold and/or less than a second threshold.

In a possible implementation, the first logical channel is further used to carry data of a second service, and a transmission error rate of the data allowed by the second service is less than a transmission error rate of the data allowed by the first service; or the first logical channel is a logical channel dedicated to carrying the data of the first service.

In a possible implementation, the transceiver module 720 is further configured to receive indication information, where the indication information indicates that the first data is data of the first service.

In a possible implementation, the indication information is information sent by a core network, and/or the indication information is included in a QFI.

In some possible implementations, the communication apparatus 700 can correspondingly implement behaviors and functions of the terminal apparatus in the foregoing method embodiments, for example, implement the methods performed by the terminal apparatus in embodiments in FIG. 5 and/or FIG. 6. The communication apparatus 700 may be a terminal device, or may be a component (for example, a chip or a circuit) used in the terminal device, or may be a chip or a chip set in the terminal device or a part that is of the chip and that is configured to perform a related method function. For example, the transceiver module 720 may be configured to perform S502 in the embodiment shown in FIG. 5, and/or configured to support another process of the technology described in this specification. The processing module 710 is configured to perform another process of the technology described in this specification in the embodiment shown in FIG. 5. For another example, the transceiver module 720 may be configured to perform S602 and S603 in the embodiment shown in FIG. 6, and/or configured to support another process of the technology described in this specification. The processing module 710 is configured to perform another process of the technology described in this specification in the embodiment shown in FIG. 6.

For example, the transceiver module 720 is configured to receive first data. The first data is data of a first service, the first service is a service that allows erroneous data transmission or delivery, and CRC is not performed on the first data. The transceiver module 720 is configured to deliver the first data carried on a first logical channel.

In a possible implementation, after delivering the first data carried on the first logical channel, the processing module 710 is configured to map, only to a first PDCP layer entity by using an SDAP layer entity, a QoS flow to which the first data belongs.

In a possible implementation, an integrity protection check function of the first PDCP layer entity is not turned on.

In a possible implementation, the transceiver module 720 is further configured to receive second data, where CRC is performed on the second data; and before delivering the first data carried on the first logical channel, the transceiver module 720 is further configured to receive a MAC PDU by using a MAC layer entity. The MAC PDU includes the first data, and does not include the second data.

In a possible implementation, the transceiver module 720 is further configured to receive a configuration message. The configuration message indicates that CRC does not need to be performed on the first data at a PHY layer.

In a possible implementation, the configuration message is one of the following: information about a first search space, a first scrambling parameter, SPS information, or information included in first DCI. DCI for scheduling the first data is located in the first search space; the DCI for scheduling the first data is scrambled by using the first scrambling parameter; the first data is transmitted on a time-frequency resource configured by using the SPS information; or the first DCI is used to schedule the first data.

In a possible implementation, that the first service is a service that allows erroneous data transmission or delivery includes: A transmission error rate of the data allowed by first service is greater than a first threshold and/or less than a second threshold.

In a possible implementation, the first logical channel is further used to carry data of a second service, and a transmission error rate of the data allowed by the second service is less than a transmission error rate of the data allowed by the first service; or the first logical channel is a logical channel dedicated to carrying the data of the first service.

In a possible implementation, the transceiver module 720 is further configured to receive indication information. The indication information may indicate a first verification method. The terminal device verifies the first data according to the first verification method.

When the communication apparatus 700 is a chip-type apparatus or circuit, the transceiver module may be an input/output circuit and/or a communication interface, and the processing module is an integrated processor, a microprocessor, or an integrated circuit.

FIG. 8 is a block diagram of a communication apparatus 800 according to an embodiment of this application. The communication apparatus 800 may be a terminal apparatus, and can implement functions of the terminal apparatus in the methods provided in embodiments of this application. Alternatively, the communication apparatus 800 may be an apparatus that can support the terminal apparatus in implementing corresponding functions in the methods provided in embodiments of this application. Alternatively, the communication apparatus 800 may be an access network apparatus, and can implement functions of the access network apparatus in the methods provided in embodiments of this application. Alternatively, the communication apparatus 800 may be an apparatus that can support the access network apparatus in implementing corresponding functions in the methods provided in embodiments of this application. The communication apparatus 800 may be a chip system. In embodiments of this application, the chip system may include a chip, or may include the chip and another discrete component. For a specific function, refer to the descriptions of the foregoing method embodiments.

The communication apparatus 800 includes one or more processors 801, configured to implement or support the communication apparatus 800 in implementing functions of the terminal device or the access network device in the methods provided in embodiments of this application. For details, refer to detailed descriptions in the method examples. Details are not described herein again. The processor 801 may also be referred to as a processing unit or a processing module, and may implement a specific control function. The processor 801 may be a general-purpose processor, a dedicated processor, or the like. For example, the processor 801 includes a baseband processor, a central processing unit, an application processor, a modem processor, a graphics processing unit, an image signal processor, a digital signal processor, a video codec processor, a controller, a memory, a neural network processor, and/or the like. The baseband processor may be configured to process a communication protocol and communication data. The central processing unit may be configured to control the communication apparatus 800, execute a software program, and/or process data. Different processors may be independent components, or may be integrated into one or more processors, for example, integrated into one or more application-specific integrated circuits.

Optionally, the communication apparatus 800 includes one or more memories 802, configured to store instructions 804. The instructions may be run on the processor 801, so that the communication apparatus 800 performs the method described in the foregoing method embodiments. The memory 802 is coupled to the processor 801. The coupling in embodiments of this application is indirect coupling or a communication connection between apparatuses, units, or modules for information exchange between the apparatuses, the units, or the modules, and may be in electrical, mechanical, or other forms. The processor 801 may cooperate with the memory 802. At least one of the at least one memory may be included in the processor. It should be noted that the memory 802 is not necessary, and therefore is shown by using dashed lines in FIG. 8.

Optionally, the memory 802 may further store data. The processor and the memory may be separately disposed, or may be integrated together. In embodiments of this application, the memory 802 may be a non-volatile memory, for example, a hard disk drive (hard disk drive, HDD) or a solid-state drive (solid-state drive, SSD), or may be a volatile memory (volatile memory), for example, RAM. The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 800 may include instructions 803 (which may also be referred to as code or a program sometimes), and the instructions 803 may be run on the processor, so that the communication apparatus 800 performs the method described in the foregoing embodiment. The processor 801 may store data.

Optionally, the communication apparatus 800 may further include a transceiver 805 and an antenna 806. The transceiver 805 may be referred to as a transceiver unit, a transceiver module, a transceiver machine, a transceiver circuit, a transceiver device, an input/output interface, or the like, and is configured to implement a transceiver function of the communication apparatus 800 by using the antenna 806.

The processor 801 and the transceiver 805 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions of the terminal device or the terminal apparatus. Details are not described herein again.

Optionally, the communication apparatus 800 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 800 may include more or fewer components, or some components may be integrated, or some components may be split. The components may be implemented by hardware, software, or a combination of software and hardware.

It should be noted that the communication apparatus in the foregoing embodiments may be a terminal device (or an access network device), or may be a circuit, or may be a chip used in the terminal device (or the access network device), or may be another combined component or part that has the foregoing terminal device (or the access network device). When the communication apparatus is a terminal device (or an access network device), the transceiver module may be a transceiver, and may include an antenna, a radio frequency circuit, and the like. The processing module may be a processor, for example, a CPU. When the communication apparatus is a component having a function of the foregoing terminal device (or the access network device), the transceiver module may be a radio frequency unit, and the processing module may be a processor. When the communication apparatus is a chip system, the communication apparatus may be an FPGA, a dedicated ASIC, a system on chip (system on chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the methods in the foregoing method embodiments. For another example, the interface circuit may alternatively be a signal transmission interface circuit between a communication processor and the transceiver machine.

An embodiment of this application further provides a communication system. Specifically, the communication system includes at least one terminal apparatus, and may further include at least one access network apparatus. For example, the communication system includes a terminal apparatus configured to implement related functions in FIG. 5 and/or FIG. 6 and an access network apparatus configured to implement related functions in FIG. 5 and/or FIG. 6. For example, the communication system may include at least one terminal device and at least one access network device. For example, the communication system includes a terminal device configured to implement functions related to the terminal apparatus in FIG. 5 and/or FIG. 6 and an access network device configured to implement functions related to the access network apparatus in FIG. 5 and/or FIG. 6. Optionally, the communication system may further include a core network device. For details, refer to related descriptions in the foregoing method embodiments. Details are not described herein again.

Alternatively, the communication system includes at least one access network apparatus, and may further include a core network device. For example, the communication system includes an access network apparatus and a core network device that are configured to implement related functions in FIG. 5 and/or FIG. 6. Optionally, the communication system may further include at least one terminal apparatus configured to implement related functions in FIG. 5 and/or FIG. 6. For details, refer to related descriptions in the foregoing method embodiments. Details are not described herein again. Alternatively, the communication system includes at least one access network device and core network device. For example, the communication system includes an access network device configured to implement functions related to the access network apparatus in FIG. 5 and/or FIG. 6. Optionally, the communication system may further include at least one terminal device configured to implement functions related to the terminal apparatus in FIG. 5 and/or FIG. 6. For details, refer to related descriptions in the foregoing method embodiments. Details are not described herein again.

An embodiment of this application further provides a computer-readable storage medium, including instructions. When the instructions are run on a computer, the computer is enabled to perform the method performed by the terminal apparatus or the access network apparatus in FIG. 5 and/or FIG. 6.

An embodiment of this application further provides a computer program product, including instructions. When the instructions are run on a computer, the computer is enabled to perform the method performed by the terminal apparatus or the access network apparatus in FIG. 5 and/or FIG. 6.

An embodiment of this application provides a chip system. The chip system includes a processor and may further include a memory, and is configured to implement functions of the terminal apparatus or the access network apparatus in the foregoing methods. The chip system may include a chip, or may include the chip and another discrete component.

To implement functions of the communication apparatuses in FIG. 7 and FIG. 8, an embodiment of this application further provides a chip, including a processor, configured to support the communication apparatuses in implementing the functions of the terminal apparatus or the access network apparatus in the foregoing method embodiments. In a possible design, the chip is connected to a memory, or the chip includes a memory. The memory is configured to store a computer program or instructions and data that are necessary for the communication apparatuses.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, a part essentially contributing to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. In this way, if these modifications and variations of this application fall within the scope of the claims of this application and equivalent technologies thereof, this application is also intended to include these modifications and variations.

## Claims

1. A communication method, comprising:
receiving first data, wherein cyclic redundancy check CRC is not performed on the first data, the first data is data of a first service, and the first service is a service that allows erroneous data transmission or delivery; and
delivering the first data carried on a first logical channel.

2. The method according to claim 1, wherein after delivering the first data carried on the first logical channel, the method further comprises:
mapping, only to the first packet data convergence protocol PDCP layer entity by using a service data adaptation protocol SDAP layer entity, a quality of service QoS flow to which the first data belongs.

3. The method according to claim 2, wherein an integrity protection check function of the first PDCP layer entity is not turned on.

4. The method according to any one of claims 1 to 3, wherein
the method further comprises: receiving second data, wherein CRC is performed on the second data; and
before delivering the first data carried on the first logical channel, the method further comprises:
receiving a MAC protocol data unit PDU by using a medium access control MAC layer entity, wherein the MAC PDU comprises the first data and does not comprise the second data.

5. The method according to any one of claims 1 to 4, wherein the method further comprises:
receiving a configuration message, wherein the configuration message indicates that CRC does not need to be performed on the first data at a physical PHY layer.

6. The method according to claim 5, wherein the configuration message is one of the following:
information about a first search space, wherein downlink control information for scheduling the first data is located in the first search space;
a first scrambling parameter, wherein the downlink control information for scheduling the first data is scrambled by using the first scrambling parameter;
semi-persistent scheduling SPS information, wherein the first data is transmitted on a time-frequency resource configured by using the SPS information; or
information comprised in first downlink control information, wherein the first downlink control information is used to schedule the first data.

7. A communication method, comprising:
sending a configuration message, wherein the configuration message indicates that cyclic redundancy check CRC does not need to be performed on first data at a physical PHY layer, the first data is data of a first service, and the first service is a service that allows erroneous data transmission or delivery;
receiving the first data carried on a first logical channel; and
sending the first data, wherein CRC is not performed on the first data.

8. The method according to claim 7, wherein before receiving the first data carried on the first logical channel, the method further comprises:
mapping, only to a first packet data convergence protocol PDCP layer entity by using a service data adaptation protocol SDAP layer entity, a quality of service QoS flow to which the first data belongs.

9. The method according to claim 8, wherein an integrity protection check function of the first PDCP layer entity is not turned on.

10. The method according to any one of claims 7 to 9, wherein the method further comprises:
receiving second data carried on a second logical channel; and
sending the second data, wherein CRC is performed on the second data.

11. The method according to claim 10, wherein before sending the first data, the method further comprises:
sending a PHY layer protocol data unit PDU to a physical PHY layer by using a medium access control MAC layer entity, wherein the PHY layer PDU comprises the first data and does not comprise the second data.

12. The method according to any one of claims 7 to 11, wherein the configuration message is one or more of the following:
information about a first search space, wherein downlink control information for scheduling the first data is located in the first search space;
a first scrambling parameter, wherein the downlink control information for scheduling the first data is scrambled by using the first scrambling parameter;
semi-persistent scheduling SPS information, wherein the first data is transmitted on a time-frequency resource configured by using the SPS information; or
information comprised in first downlink control information, wherein the first downlink control information is used to schedule the first data.

13. The method according to any one of claims 7 to 12, wherein the method further comprises:
receiving indication information, wherein the indication information indicates that the first data is data of the first service.

14. The method according to claim 13, wherein the indication information is information sent by a core network, and/or the indication information is comprised in a quality of service flow identifier QFI.

15. A communication apparatus, comprising a processing module and a transceiver module, wherein
the transceiver module is configured to receive first data, and deliver the first data carried on a first logical channel, wherein cyclic redundancy check CRC is not performed on the first data, the first data is data of a first service, and the first service is a service that allows erroneous data transmission or delivery; and
the processing module is configured to process the first data.

16. The apparatus according to claim 15, wherein after the transceiver module delivers the first data carried on the first logical channel, the processing module is further configured to map, only to the first packet data convergence protocol PDCP layer entity by using a service data adaptation protocol SDAP layer entity, a quality of service QoS flow to which the first data belongs.

17. The apparatus according to claim 16, wherein an integrity protection check function of the first PDCP layer entity is not turned on.

18. The apparatus according to any one of claims 15 to 17, wherein
the transceiver module is further configured to receive second data, wherein CRC is performed on the second data; and
before delivering the first data carried on the first logical channel, the transceiver module is further configured to: receive a MAC protocol data unit PDU by using a medium access control MAC layer entity, wherein the MAC PDU comprises the first data and does not comprise the second data.

19. The apparatus according to any one of claims 15 to 18, wherein the transceiver module is further configured to:
receive a configuration message, wherein the configuration message indicates that CRC does not need to be performed on the first data at a physical PHY layer.

20. The apparatus according to claim 19, wherein the configuration message is one of the following:
information about a first search space, wherein downlink control information for scheduling the first data is located in the first search space;
a first scrambling parameter, wherein the downlink control information for scheduling the first data is scrambled by using the first scrambling parameter;
semi-persistent scheduling SPS information, wherein the first data is transmitted on a time-frequency resource configured by using the SPS information; or
information comprised in first downlink control information, wherein the first downlink control information is used to schedule the first data.

21. A communication apparatus, comprising a processing module and a transceiver module, wherein
the processing module is configured to determine a configuration message, wherein the configuration message indicates that CRC does not need to be performed on first data at a physical PHY layer, the first data is data of a first service, and the first service is a service that allows erroneous data transmission or delivery; and
the transceiver module is configured to: send a configuration message, receive the first data carried on a first logical channel, and send the first data, wherein cyclic redundancy check CRC is not performed on the first data.

22. The apparatus according to claim 21, wherein before the transceiver module receives the first data carried on the first logical channel, the transceiver module is further configured to:
map, only to a first packet data convergence protocol PDCP layer entity by using a service data adaptation protocol SDAP layer entity, a quality of service QoS flow to which the first data belongs.

23. The apparatus according to claim 22, wherein an integrity protection check function of the first PDCP layer entity is not turned on.

24. The apparatus according to claim 23, wherein before sending the first data, the transceiver module is further configured to: send a PHY layer protocol data unit PDU to a physical PHY layer by using a medium access control MAC layer entity, wherein the PHY layer PDU comprises the first data and does not comprise the second data, and CRC is performed on the second data.

25. The apparatus according to any one of claims 21 to 24, wherein the configuration message is one or more of the following:
information about a first search space, wherein downlink control information for scheduling the first data is located in the first search space;
a first scrambling parameter, wherein the downlink control information for scheduling the first data is scrambled by using the first scrambling parameter;
semi-persistent scheduling SPS information, wherein the first data is transmitted on a time-frequency resource configured by using the SPS information; or
information comprised in first downlink control information, wherein the first downlink control information is used to schedule the first data.

26. The apparatus according to any one of claims 21 to 25, wherein the method further comprises:
receiving indication information, wherein the indication information indicates that the first data is data of the first service.

27. The apparatus according to claim 26, wherein the indication information is information sent by a core network, and/or the indication information is comprised in a quality of service flow identifier QFI.

28. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 6 by using a logic circuit or executing code instructions, or the processor is configured to implement the method according to any one of claims 7 to 14 by using a logic circuit or executing code instructions.

29. A communication system, wherein the communication system comprises a network device and a core network device, the network device is configured to implement the method according to any one of claims 7 to 14, the core network device is configured to send indication information, the indication information indicates that first data is data of a first service, and the first service is a service that allows erroneous data transmission or delivery.

30. The system according to claim 29, wherein the system further comprises a terminal device, and the terminal device is configured to implement the method according to any one of claims 1 to 6.

31. A computer-readable storage medium, wherein the computer-readable storage medium stores a computer program, and when the computer program is run, the method according to any one of claims 1 to 6 is implemented, or the method according to any one of claims 7 to 14 is implemented.

32. A computer program product, wherein the computer program product comprises a computer program, and when the computer program is run on a computer, the computer is enabled to perform the method according to any one of claims 1 to 6, or the computer is enabled to perform the method according to any one of claims 7 to 14.

33. A chip system, wherein the chip system comprises:
a processor and an interface, wherein the processor is configured to invoke instructions from the interface and run the instructions, and when the processor executes the instructions, the method according to any one of claims 1 to 6 is implemented, or the method according to any one of claims 7 to 14 is implemented.
